# EUROPÄISCHE PATENTSCHRIFT

(11) **EP 2 688 710 B1**
(45) Veröffentlichungstag und Bekanntmachung des Hinweises auf die Patenterteilung: **04.03.2015**
(21) Anmeldenummer: 12709875.4
(22) Anmeldetag: 16.03.2012
(51) Int. Cl.: B23Q 1/34, B23Q 1/36, B24B 5/42, B24B 19/12, B24B 41/04

(54) **SCHLEIFMASCHINEN-EINRICHTUNG MIT SCHWENKLAGERUNG EINER SCHLEIFSPINDELEINHEIT UND VERFAHREN ZUM VERSCHWENKEN EINER SCHLEIFSPINDELEINHEIT AN EINER SCHLEIFMASCHINE**
GRINDING MACHINE DEVICE WITH PIVOTABLE MOUNTING OF A GRINDING SPINDLE UNIT AND METHOD FOR PIVOTING A GRINDING SPINDLE UNIT ON A GRINDING MACHINE
DISPOSITIF DE MEULEUSE A MONTAGE PIVOTANT D'UNE UNITE DE BROCHE PORTE-MEULE ET PROCEDE PERMETTANT DE FAIRE PIVOTER UNE UNITE DE BROCHE PORTE-MEULE SUR UNE MEULEUSE

(30) Priorität: 24.03.2011 DE 102011014987
(43) Veröffentlichungstag der Anmeldung: 29.01.2014
(73) Patentinhaber: Erwin Junker Maschinenfabrik GmbH, 77787 Nordrach (DE)
(72) Erfinder: JUNKER, Erwin, 77815 Bühl (DE)
(74) Vertreter: Leske, Thomas
(86) Internationale Anmeldenummer: PCT/EP2012/054687
(87) Internationale Veröffentlichungsnummer: WO 2012/126840

(56) Entgegenhaltungen:
- EP-A2- 1 175 960
- DE-A1- 10 235 808
- DE-A1- 10 355 493
- DE-C- 810 954

## Beschreibung

Die Erfindung betrifft eine Schleifmaschinen-Einrichtung mit einer Schleifspindeleinheit, die eine darin gelagerte, motorisch angetriebene Antriebswelle und eine an deren einem Ende befestigte Schleifscheibe aufweist, und mit einer Schwenklagerung der Schleifspindeleinheit an einem Aufnahmeteil der Schleifmaschine, wobei durch die Schwenklagerung unterschiedliche Schrägstellungen der Antriebswelle gegenüber einer Bezugsgeraden eingestellt werden, gemäß dem Oberbegriff des Anspruchs 1.

Die Erfindung betrifft auch ein Verfahren zum Verschwenken einer Schleifspindeleinheit, die über mindestens eine Schwenkachse mit einem Aufnahmeteil einer Schleifmaschine verbunden ist und eine motorisch angetriebene Antriebswelle sowie eine an deren einem Ende befestigte Schleifscheibe aufweist, wodurch beim Verschwenken der Schleifspindeleinheit unterschiedliche Schrägstellungen der Antriebswelle gegenüber einer Bezugsgeraden eingestellt werden, gemäß dem Oberbegriff des Anspruchs 15.

Nach dem Stand der Technik besteht die Schwenklagerung derartiger, an den Schleifmaschinen befindlicher Schleifspindeleinheiten darin, dass die Schleifspindeleinheit zusammen mit dem Aufnahmeteil als Ganzes, also mit ihrem gesamten Gehäuse und dem zugehörigen Antriebsmotor, motorisch um eine Schwenkachse gegenüber der übrigen Schleifmaschine verschwenkt wird. Die Schwenkachse ist dabei als übliche Schwenkachse im Sinne des Machinenbaus ausgebildet. Das heißt, die Schwenkachse kann baulich konkret in der Form einer tragenden Welle ausgebildet oder geometrisch exakt durch die Mittelachse von Lagern definiert sein, in denen die gesamte Schleifspindeleinheit gelagert ist. Durch das Verschwenken der Schleifspindeleinheit lässt sich deren Schleifscheibe in unterschiedlichen Winkeln an das Werkstück anstellen, und es lassen sich auch unterschiedliche Schleifscheiben zur Wirkung bringen, wenn an einem verschwenkbaren Aufnahmeteil der Schleifmaschine mehrere Schleifspindeln angebracht sind.

Bei dem bekannten Aufbau der Rund-/Unrund-Universalschleifmaschinen wird die Schwenkachse der schwenkbaren Schleifspindeleinheiten im Sprachgebrauch der Praktiker vielfach als B-Achse bezeichnet. Die B-Achse ist vorzugsweise senkrecht zur Antriebswelle der Schleifspindeleinheit gerichtet und steht auch senkrecht auf der Ebene, die durch die möglichen linearen Verschiebeachsen von Schleifscheibe und/oder Werkstück gegeben ist, wobei diese Verschiebeachsen in der Praxis als X- und Z-Achse bezeichnet werden. In den am weitesten verbreiteten Fällen verläuft die genannte Ebene waagerecht, so dass die B-Achse lotrecht gerichtet ist. Gemäß dem Stand der Technik ist zum Verschwenken der Schleifspindeleinheit ein Stellmotor üblich, dessen Steuerung in die Steuer- und Regeleinrichtung der gesamten Schleifmaschine einbezogen ist. Ein Beispiel für den hier geschilderten Stand der Technik zeigt die DE 102 35 808 A1.

Mit diesen bekannten Einrichtungen zum Verschwenken von Schleifspindeleinheiten lassen sich große Schwenkwege verwirklichen und zahlreiche schleiftechnische Aufgaben mit großer Genauigkeit lösen. Mittels der CNC-Steuerung kann zum Beispiel die Schrägstellung der Schleifscheibe im laufenden Betrieb ständig verändert werden, wobei gleichzeitig auch eine Bewegung in einer oder mehreren linearen Bewegungsrichtungen erfolgt. Auf diese Weise lassen sich komplexe gewölbte und/oder geneigt verlaufende Konturen mit großer Genauigkeit und hoher Oberflächengüte herstellen. Es gibt aber Grenzfälle, in denen die Schleifmaschinen mit den auf die übliche Weise verschwenkbaren Schleifspindeleinheiten nicht mehr zu befriedigenden Ergebnissen führen.

Ein Grenzfall dieser Art ist das Schleifen von an Wellen befindlichen Lagerstellen, die eine sogenannte Kontur erhalten sollen, die von der Zylinderform abweicht. Diese Kontur kann in einer leicht nach außen gewölbten balligen Kontur, dem in der Sprache der Praktiker so genannten "Balles" bestehen. Bei den Lagern von Kurbelwellen zum Beispiel liegt die Abweichung von der Zylinderform nach außen in einem Bereich von 0 bis 5 µm. An anderen Wellen wie beispielsweise Nockenwellen können auch konische Lagerstellen oder Nocken, also die Kontur eines Kegels gefragt sein, ebenso die Kontur eines Doppelkegels mit einem Maximum in der axialen Mitte. Derartige Konturen lassen sich wirtschaftlich vor allem mit schräg gestellten Schleifscheiben erzeugen.

Oft muss an den zu schleifenden Werkstücken eine Zylinderkorrektur vorgenommen werden, weil Aufspannfehler vorliegen. Dieses Problem stellt sich besonders bei großen Kurbelwellen, die verhältnismäßig weiche Gebilde sind und bei denen trotz aller Sorgfalt nach dem Aufspannen zum Schleifen nicht alle Hauptlager genau fluchtend zu der maßgeblichen Längsachse der Kurbelwelle verlaufen. Derartigen Fehlern muss beim Schleifen durch eine bewusst gesteuerte Korrekturabweichung von der Grundstellung gegengesteuert werden. In diesen und ähnlichen Anwendungsfällen wird gefordert, dass die Längs- und Rotationsachse der Schleifscheibe mit großer Genauigkeit um einen sehr kleinen Winkel gegenüber der Bezugsgeraden verschwenkt wird. Die Bezugsgerade ist dabei im Normalfall die Längs- und Rotationsachse der Schleifscheibe, wenn diese genau parallel zu der Mittelinie eines zu schleifenden rotierenden Werkstücks verläuft.

Ein anderer Fall, in dem ein Schrägstellen der Schleifscheibe um einen geringen, aber genau einzustellenden Winkel gegenüber dem Werkstück erforderlich ist, betrifft das Außenrundschleifen von rotationssymmetrischen Werkstücken, wobei eine zylindrisch abgerichtete Schleifscheibe mit einem geringen Freiwinkel gegen die zu bearbeitende Werkstückfläche geführt ist und die stirnseitig am Werkstück anliegende Schleifscheibe die fertig geschliffene Werkstücksfläche nur punktförmig berührt, vgl. DE 34 35 313 C2. Dieses, unter der Handelsbezeichnung "Quickpoint" bekannte Schleifverfahren ermöglicht kurze Schleifzeiten in Verbindung mit geringer Wärmeentwicklung und hoher Drehzahl des Werkstücks. Ein zuverlässiges Einstellen des Freiwinkels selbst in einem geringen Schwenkbereich kann vorteilhaft sein, wenn unterschiedliche Schleifaufgaben zu bewältigen sind oder eine vorhandene Schleifmaschine nicht dauernd nach diesem Verfahren arbeiten soll.

In allen diesen hier aufgeführten Anwendungsfällen kommen die Schwenklagerungen der Schleifspindeln, also die üblichen motorisch verstellbaren Schleifspindeleinheiten an ihre Grenzen. Der Grund dafür besteht darin, dass diese Schleifspindeleinheiten wegen der erforderlichen Schleifgenauigkeit und auch durch die erforderliche Schwenkeinrichtung mit Lagern und Antrieben verhältnismäßig massiv ausgeführt werden. Das Bewegen dieser großen Massen erfordert wieder große Antriebe, so dass die Massenträgheit insgesamt die Verstellgeschwindigkeit und die Einstellgenauigkeit verringert. Die normale Lagerung der Schleifspindeleinheiten, die für die großen Schwenkwege beim Schwenken um die B-Achse ausreicht, genügt für die Feineinstellung in den oben genannten Fällen nicht mehr. Gefordert ist eine hochgenaue B-Achse, die spielfrei und ohne Reibung laufen muss. Ein Ansatz zur Verbesserung könnte darin bestehen, die Schwenklagerung der Schleifspindeleinheiten um die B-Achse hydrostatisch auszubilden. Diese Lösung wäre jedoch sehr teuer und könnte zu kompliziert zu betreibenden Schleifmaschinen führen.

Die WO 2008/075020 A1 enthält einen Vorschlag, wie eine schmale Schleifscheibe von kreisförmiger Umfangskontur im Betrieb so verstellt werden kann, dass ihre mit dem Schleifbelag versehene Umfangsfläche unter verschiedenen Winkeln an das zu schleifende Werkstück zugestellt wird, obwohl die Lage der Rotations- und Antriebsachse der Schleifscheibe unverändert bleibt. Zu diesem Zweck ist der zentrumsnahe Bereich des schmalen scheibenförmigen Schleifscheiben-Mittelteils der Schleifscheibe zwischen zwei Befestigungsflanschen eingespannt. Von diesen hat der auf der einen Seite des Schleifscheiben-Mittelteils befindliche Befestigungsflansch einen größeren Durchmesser als der auf der anderen Seite des Schleifscheiben-Mittelteils befindliche Befestigungsflansch. Die Verteilung der Drehmassen ist daher unsymmetrisch. Wenn diese Schleifscheibe in Rotation versetzt wird, verformt sie sich mit zunehmender Drehzahl reproduzierbar von einer ebenen kreisförmigen Platte zu der Form eines Tellers oder einer flachen Schüssel, wobei sich der Befestigungsflansch größeren Durchmessers innen auf dem Boden der Schüssel befindet. Auf Grund dieser Verformung nimmt die kreisförmige Umfangskontur der Schleifscheibe eine Schrägstellung ein; die Größe des in einer Axialebene gemessenen Winkels im Vergleich zu der Ausgangsstellung bei unbewegter Schleifscheibe ist von der jeweils gewählten Drehzahl abhängig.

Die verstellbare Schleifscheibe gemäß der WO 2008/075020 A1 ermöglicht es, allein durch Verändern der Drehzahl mit einem konkav konturierten Schleifbelag nach außen gewölbte Lagersitze zu schleifen, deren axiale Erstreckung breiter ist als die des Schleifbelages, ohne dass dabei die Antriebswelle der Schleifscheibe schräg gestellt werden muss. Auf dieselbe Weise können auch mit einem Schleifbelag, der ein Rechteck-Profil hat, kegelförmig geformte Nocken von wechselnder Neigungsrichtung an einer Nockenwelle angeschliffen werden.

Nachteilig ist an dem Vorschlag gemäß der WO 2008/075020 A1, dass der Zusammenhang zwischen der Schrägstellung der Schleifscheiben-Umfangsfläche und der Drehzahl von zahlreichen Parametern abhängt, so dass für jede Schleifscheibe eine eigene Kennlinie erstellt werden muss. Zudem beeinflusst die Geometrie der Schleifstelle die im Schleifbetrieb sich tatsächlich einstellende Drehzahl, wobei eine veränderte Drehzahl die vorgewählte Schrägstellung ungewollt verändert. Bei ungleichen Belastungen sind zudem Drehzahl-Schwankungen unausbleiblich, was das Schleifergebnis ebenfalls ungünstig beeinflussen kann. Nachteilig dürfte weiter sein, dass die für die Formänderung der Schleifscheiben optimale Drehzahl oft von einer für ein optimales Schleifergebnis erforderlichen Drehzahl abweichen wird. Um beides wenigstens annähernd in Übereinstimmung zu bringen, müsste man besondere gezielte Veränderungen an dem Schleifscheiben-Körper vornehmen, wodurch letztlich eine größere Zahl von Schleifscheiben-Typen erforderlich wird.

Der Erfindung liegt daher die Aufgabe zugrunde, eine Vorrichtung und ein Verfahren der jeweils eingangs genannten Art zu schaffen, mit denen Schleifscheiben um kleine Winkelbeträge trägheitsarm und mit großer Genauigkeit schräg gestellt werden können, um damit ein zuverlässiges und kostengünstiges Schleifen von gewölbten und/oder geneigten Werkstück-Konturen zu erreichen.

Dieses Ziel wird hinsichtlich der Vorrichtung mit den Merkmalen gemäß dem kennzeichnenden Teil des Anspruchs 1 erreicht. Für das Verfahren ist die Lösung im kennzeichnenden Teil des Anspruchs 15 angegeben.

Die Erfindung macht sich die Erkenntnis zunutze, dass sehr viele Werkstoffe, besonders Stahl-Eisen-Werkstoffe, in einem gewissen Umfang federelastische Eigenschaften besitzen. Bei entsprechender Formgebung lassen sich daher Zonen gezielter elastischer Materialverformung ausbilden, die wie ein Gelenk im elastischen Bereich auszubiegen sind und bei Entlastung wieder zurückfedern. Gemäß der Erfindung ist die Schleifspindeleinheit über eine derart ausgebildete Materialzone mit einem Aufnahmeteil der Schleifmaschine verbunden und von diesem getragen. Indem diese Zone sich nahe der Schleifscheibe befindet, steht über die Länge der Antriebswelle ein genügend langer Hebelarm zur Verfügung, an dessen Ende eine Verstelleinheit angreift. Wenn diese aktiviert wird und mit einer Stell- oder Biegekraft auf den Hebelarm einwirkt, erfüllt die Zone gezielter elastischer Materialverformung ihre Funktion als Gelenk, und die Schleifspindeleinheit wird genau einstellbar ausgelenkt, die Schleifscheibe somit gegenüber ihrer Ausgangsstellung schräg gestellt.

Vorteilhafte Weiterbildungen der erfindungsgemäßen Schleifmaschinen-Einrichtung sind in den Ansprüchen 2 bis 14 aufgeführt. Eine erste vorteilhafte Weiterbildung der erfindungsgemäßen Schleifmaschinen-Einrichtung besteht darin, dass die Zonen gezielter elastischer Materialverformung die Funktion einer Schwenkachse mit zwei an diese anschließenden Schamierflügeln nach Art eines Filmscharniers aufweisen. Dabei trägt dann der erste Scharnierflügel die Schleifspindeleinheit, während der zweite Scharnierflügel mit dem Aufnahmeteil verbunden ist.

Auf diese Weise entsteht ein Schwenkgelenk, das ohne einen eigenen, getrennt ausgebildeten Achskörper und ohne Lager auskommt. Die beiden Scharnierflügel und die Gelenkachse bilden bei der Schleifmaschinen-Einrichtung gemäß der Erfindung ein einteiliges Bauteil. Ersichtlich hat solch ein Schwenkgelenk schon vom Prinzip her wesentlich geringere Drehmassen als die her-kömmlichen motorisch verschwenkbaren Schleifspindeleinheiten, die zum Schwenken um die B-Achse dienen. Die durch das Filmscharnier gebildete Schwenkachse ist steif in ihrer Tragfunktion und spielfrei in ihrer Schwenkfunktion. Bei der Auslegung kommt es darauf an, den richtigen Mittelweg zwischen Elastizität und Tragfähigkeit zu finden. Bei hoher Elastizität ist das Filmscharnier in einem größeren Winkelbereich auslenkbar. Darunter darf aber nicht die Tragfähigkeit leiden, vielmehr muss das Filmscharnier auch ausreichend steif sein. Der richtige Mittelweg ist durch Versuche zu ermitteln. Der größte mögliche Verstellwinkel wird im Übrigen durch die Elastizitätsgrenze definiert. In der Praxis ergeben sich in dem hier aufgezeigten Zusammenhang Schwenkwinkel zwischen 0-Grad und 0,2-Grad.

Ein besonderer Verstellmotor ist bei der erfindungsgemäßen Schleifmaschinen-Einrichtung nicht erforderlich; es genügt die schon erwähnte Verstelleinheit, die z.B. eine Druckwirkung auf den auslenkbaren Teil der Einrichtung ausübt. Da die Schwenklagerung gemäß der Erfindung trägheitsarm und zuverlässig anspricht und zudem eine einmal gewählte Auslenkstellung genau einhält, kann der Verstellmechanismus problemlos in eine CNC-Steuerung einbezogen werden. Es ist also möglich, im laufenden Schleifbetrieb die Schrägstellung der Schleifscheiben entsprechend dem gewählten Schleifprogramm fortlaufend zu ändern.

Einen besonderen Vorteil zeigt die erfindungsgemäße Schleifmaschinen-Einrichtung, wenn mit schmalen Schleifscheiben an den Haupt- und Hublagem von Kurbelwellen eine ballige Kontur, der sog. "Balls" angeschliffen werden soll. In diesem Fall wird eine schmale Schleifscheibe von konkaver Schleiffläche benutzt, wobei die axiale Breite der Schleifscheibe geringer ist als die Lagerbreite der Haupt- und/oder Hublager. Diese Lagerbreite wird durch die Kurbelwangen definiert. Hierbei ist es möglich, in zwei Einstichen mit unterschiedlicher Schrägstellung der Schleifscheibe die gesamte Lagerfläche ballig zu schleifen. Es entfällt also die problematische Verwendung einer Formschleifscheibe, die sich über die gesamte Lagerbreite zu erstrecken hat, wie das auch schon mit in ihrer axialen Breite verstellbaren Schleifscheiben versucht worden ist.

Weiter können beim Vorgehen gemäß der Erfindung handelsübliche Schleifscheiben verwendet werden, und die Drehzahl der Schleifscheiben kann allein nach schleiftechnischen Gesichtspunkten frei gewählt werden.

Die Ansprüche 3 und 4 zeigen Möglichkeiten auf, die durch ein Filmscharnier gebildete Schwenkachse der Schleifmaschinen-Einrichtung konstruktiv durch die Formgebung an der Gelenkstelle auszubilden. Eine andere Möglichkeit wird gemäß Anspruch 5 aufgezeigt, wonach zonenweise ein metallener Werkstoff metallurgisch so behandelt werden kann, dass bei einer Auslenkung eine Biegeachse funktionell zur Wirkung kommt.

Das die Schwenkachse bildende Filmscharnier ist prinzipbedingt ein einteiliges Bauteil. Allein unter dem Gesichtspunkt der Funktion könnte daher die Schleifspindeleinheit zusammen mit ihrem Aufnahmeteil eine einteilige Konstruktion bilden, wobei die Verbindung über die Schwenkachse erfolgt. In der Praxis wird man allerdings eine mehrteilige Konstruktion bevorzugen, was allein schon durch fertigungstechnische Gesichtspunkte begründet ist. Deshalb ist gemäß Anspruch 6 die Anordnung eines eigenen Schwenkachsträgers vorgeschrieben, der die Schwenkachse enthält und sich zwischen dem Aufnahmeteil und der Schleifspindeleinheit befindet. Der Schwenkachsträger ist dann sowohl mit dem Aufnahmeteil als auch mit der Schleifspindeleinheit verbunden, wobei die eine dieser Verbindungen im Einzelfall auch wieder einstückig erfolgen kann.

Die Ansprüche 7 und 8 beziehen sich auf ein praxisnahes Ausführungsbeispiel. Dabei ist eine besondere Stütz- und Tragkonstruktion vorgesehen, welche sich aus einem Teilgehäuse und einem Schwenkachsträger zusammensetzt. Das Teilgehäuse ist vollständig starr mit dem Aufnahmeteil der Schleifmaschine verbunden, der Schwenkachsträger mit diesen beiden jedoch nur zu einem Teil. An dem Schwenkachsträger ist die Schwenkachse ausgebildet, welche sich in diesem Fall aus zwei getrennten Schwenkachsen zusammensetzt, die ausgehend von dem festen Teil des Schwenkachsträgers in zwei bewegliche Tragarme übergehen. Längs der beiden Tragarme erstreckt sich die mit ihnen verschraubte Schleifspindeleinheit. Insgesamt stützt und versteift die Stütz- und Tragkonstruktion die gesamte Anordnung und führt dazu, dass die Schleifspindeleinheit mit großer Lagegenauigkeit ihre verschiedenen Verschwenkstellungen einnehmen kann.

Die Ansprüche 9 bis 11 sind auf die konkrete Ausbildung der Verstelleinheit gerichtet, welche mittels eines beweglichen Druckbolzens einen steuerbaren Abstand zwischen der Schleifspindeleinheit und dem Aufnahmeteil oder einem mit diesem starr verbundenen Zwischenbauteil herstellt. Durch die im Anspruch 11 im Einzelnen vorgeschriebene Ausbildung der Verstelleinheit gelingt es, durch Reibung oder Vibrationen bedingte Ungenauigkeiten aus dem Verstellvorgang fern zu halten. So erfolgt die Bewegung des maßgeblichen Druckbolzens über den Außenring eines Nadellagers in der Weise, dass eine Gleitbewegung zwischen dem Außenring des Nadellagers und dem Druckbolzen vermieden ist. Ferner wird durch eine besondere Anordnung von Federn erreicht, dass der die Verstellung bewirkende Druckbolzen in ständiger spielfreier Anlage an dem Bauteil gehalten ist, an dem er angreift. Je nach dem, ob die Ausgangsstellung des Druckbolzens der vollständig eingefahrene Zustand oder eine Mittelstellung ist, kann mit der Verstelleinheit gemäß Anspruch 11 ein Verschwenken der Schleifspindeleinheit in nur einer Richtung oder in zwei entgegengesetzten Richtungen erfolgen.

Gemäß Anspruch 12 ist das Aufnahmeteil, an dem die erfindungsgemäße Schleifmaschinen-Einrichtung schwenkbar befestigt ist, ein Schleifspindelstock, der in mindestens einer Richtung linear beweglich ist. Damit ist zugleich auch ein in zwei zueinander senkrechten Richtungen bewegbarer Kreuzschlitten umfasst. Diese Anordnung kommt z.B. dann in Frage, wenn in der schon beschriebenen Weise an die Haupt- und/oder Hublager von Kurbelwellen eine bestimmte Kontur angeschliffen werden soll. In diesem Fall muss der Schleifspindelstock längs der Kurbelwelle verfahren und danach mit schräggestellter Schleifscheibe an das zu schleifende Lager zugestellt werden.

Anspruch 13 zeigt demgegenüber die Möglichkeit, dass das Aufnahmeteil selbst schon ein Schwenkgehäuse ist, das im Sinne der bekannten B-Achse für sich schwenkbar auf einem linear verfahrbaren Schleifspindelstock wie bspw. einem Kreuzschlitten angeordnet ist. In diesem Fall kann zunächst ein Verschwenken über einen großen Schwenkweg mittels des Schwenkgehäuses erfolgen, und sodann wird noch eine Korrektureinstellung der Schleifspindeleinheit über die Zonen gezielter elastischer Materialverformung vorgenommen.

Anspruch 14 ist darauf gerichtet, das Verschwenken der Schleifspindeleinheit gemäß der Erfindung in die CNC-Steuerung der Schleifmaschine einzubeziehen.

Hinsichtlich des Verfahrens ist gemäß Anspruch 16 die Weiterbildung aufgeführt, wonach ein für sich verschwenkbares Schwenkgehäuse mit dem gezielten zusätzlichen Verschwenken der Schleifspindeleinheit kombiniert wird, wodurch den großen Schwenkwegen des Schwenkgehäuses die Mikroschwenkwege der Schleifspindeleinheit relativ zum Schwenkgehäuse überlagert werden.

Die Erfindung wird anschließend anhand von Ausführungsbeispielen noch näher erläutert, die in den Zeichnungen dargestellt sind. Die Figuren zeigen das Folgende:
- Fig. 1: zeigt am Beispiel einer Kurbelwelle, wie es in der Praxis erforderlich wird, die Rotationsachse der Schleifscheibe gegenüber der Werkstück-Längsachse um einen kleinen Winkel mit größter Genauigkeit zu verstellen.
- In Fig. 2a bis 2c: ist die sich gemäß Fig. 1 ergebende Eingriffsstelle zwischen der Schleifscheibe und dem Werkstück vergrößert dargestellt.
- Die Fig. 3a und 3b: erläutern das Grundprinzip der Erfindung anhand einer schematischen Darstellung mit zwei unterschiedlichen Schwenkstellungen der Schleifspindeleinheit.
- Fig. 4: zeigt in einer schematischen Darstellung, wie das Verschwenken der Schleifspindeleinheit gemäß der Erfindung zusätzlich zu dem Verschwenken nach dem Stand der Technik erfolgen kann.
- Fig. 5: ist eine Ansicht von oben auf eine praxisnahe Ausführung einer erfindungsgemäßen Schleifmaschinen-Einrichtung.
- Fig. 6: zeigt einen senkrechten Teilschnitt längs der Linie A-B in Fig. 5.
- Fig. 7: enthält eine räumliche Darstellung der in den Fig. 5 und 6 gezeigten Halterung für die Schleifspindel-Einheit.
- Fig. 8: erläutert die Funktion der Verstelleinrichtung in einem senkrechten Längsschnitt, entsprechend einem vergrößerten Schnitt gemäß der Linie C-D in Fig. 6.
- Fig. 9: zeigt eine Einzelheit der Verstelleinheit entsprechend dem Schnitt E-F in Fig. 8.

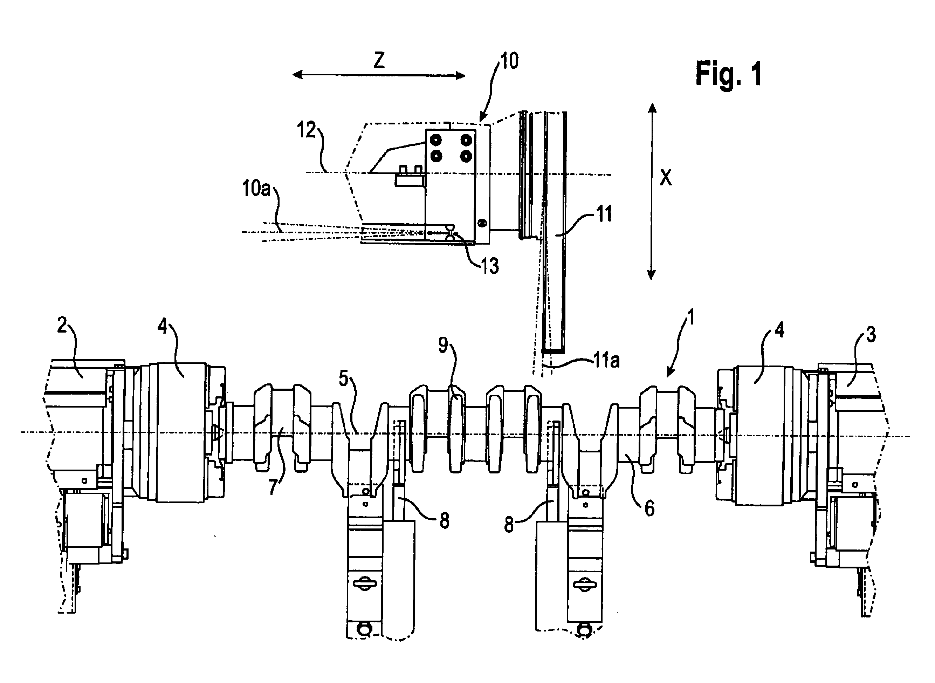

In Fig. 1 ist als Werkstück die Kurbelwelle 1 eines Sechs-Zylinder-Verbrennungsmotors dargestellt, die zum Schleifen zwischen einem Werkstückspindelstock 2 und einem Reitstock 3 eingespannt ist. Beide Spindelstöcke 2, 3 haben Spannfutter 4 mit ausgleichenden Spannbacken und Spitzen; die Kurbelwelle 1 ist dadurch zur Rotation um ihre durch die Hauptlager 6 verlaufende Längsachse 5 angetrieben. Die Kurbelwelle 1 hat sieben Hauptlager 6 und sechs Hublager 7; zwei der Hauptlager 6 sind dabei über Lünetten 8 abgestützt. Haupt- und Hublager 6, 7 sind durch die Kurbelwangen 9 miteinander verbunden. Längs der Kurbelwelle 1 verlaufend ist eine Schleifspindeleinheit 10 angeordnet, von der in Fig. 1 nur der auf der Seite der Schleifscheibe 11 befindliche Endbereich gezeichnet ist. Mit 12 ist die Rotationsachse der Schleifscheibe 11 bezeichnet; die sich aus der Antriebswelle ergibt, auf der die Schleifscheibe 11 befestigt ist.

Die Grundstellung beim Rundschleifen der Hauptlager 6 und/oder der Hublager 7 mit einer Schleifscheibe 11 von zylindrischer Kontur besteht zunächst darin, dass die Rotationsachse 12 der Schleifscheibe 11 parallel zu der Längsachse 5 der Kurbelwelle verläuft. Diese Stellung der Rotationsachse 12 gemäß Fig. 1 legt in diesem Fall die im Oberbegriff des Anspruchs 1 angegebene Bezugsgerade fest. Die Schleifspindeleinheit 10 wird dabei in der Richtung senkrecht zu der Längsachse 5 der Kurbelwelle 1 an diese zugestellt. Entsprechend der Übung in der betrieblichen Praxis ist diese Richtung mit dem Doppelpfeil X bezeichnet. Außerdem können die Kurbelwelle 1 und die Schleifspindeleinheit in Richtung der Z-Achse, also senkrecht zur X-Achse, relativ zueinander verschoben werden. Mit den Achsen X und Z ist die eingangs erwähnte waagerechte Bezugsebene festgelegt, wie sie bei den üblichen Rund-/Unrund-Universalschleifmaschinen vorliegt.

Das Schleifen in der vorerwähnten Grundstellung setzt jedoch voraus, dass Hauptlager 6 und/oder Hublager 7 eine zylindrische Korrektur erhalten sollen und genau achsparallel eingespannt sind. Der Begriff "zylindrische Korrektur" schließt in diesem Fall auch ein, dass die Schleifscheibe an ihrer Umfangsfläche konkav oder konvex sein kann. Oft soll jedoch an den zu schleifenden Werkstücken z. B. aufgrund von Aufspannfehlern eine Zylinderkorrektur vorgenommen werden. Bei Kurbelwellen wird zum Beispiel oft eine nach außen gewölbte Kontur, also eine ballige Umfangsfläche angestrebt, deren Abweichung von der Zylinderfläche nach außen üblicherweise in einem sehr geringen Bereich von bis zu 5 µm liegt. An anderen Werkstücken wie beispielsweise Nockenwellen können auch konische Lagerstellen oder Nocken, also die Kontur eines Kegels gefragt sein, ebenso die Kontur eines Doppelkegels mit einem Maximum in der axialen Mitte.

Besonders bei großen Kurbelwellen stellt sich ein weiteres Problem: diese Kurbelwellen sind verhältnismäßig weiche Gebilde und können trotz aller Sorgfalt beim Schleifen nicht so gelagert werden, dass die Mittelachsen der Spann- und Stützelemente aller Hauptlager 6 genau fluchtend zu der Längsachse 5 der Kurbelwelle 1 verlaufen. Beim Schleifen in der Grundstellung ergeben sich dadurch Abweichungen von der gewünschten Kontur, denen man beim Schleifen durch eine bewusst gesteuerte Korrektur-Abweichung von der Grundstellung entgegenwirken möchte.

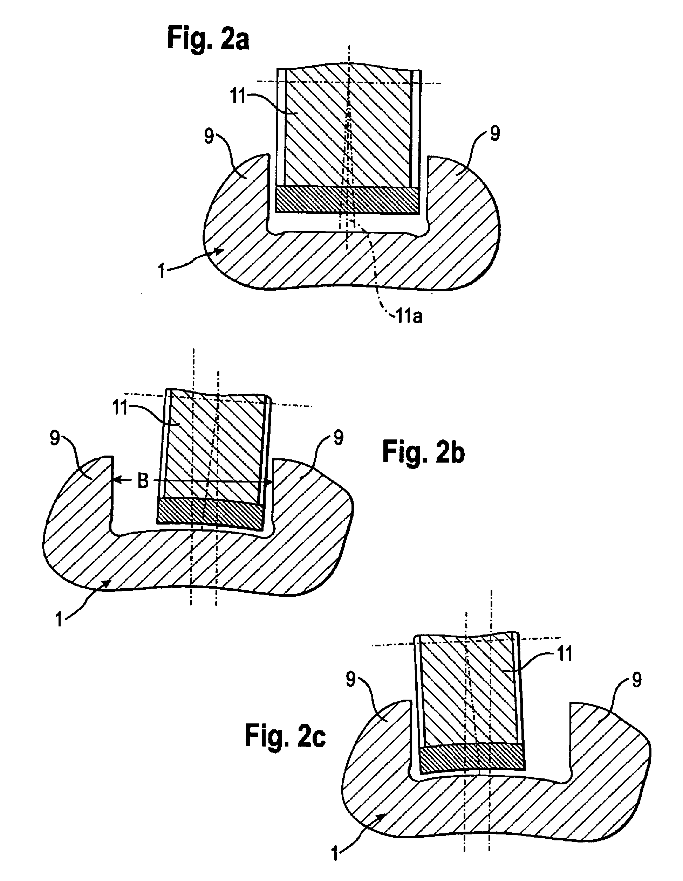

Damit diese Ziele erreicht werden, erhält die Schleifspindeleinheit 10 gemäß der Erfindung eine Schwenklagerung 13, die auf Zonen gezielter elastischer Materialverformung beruht und eine geringe, aber genau einstellbare Schrägstellung zumindest desjenigen Teils der Schleifspindeleinheit ermöglicht, der die motorisch angetriebene Antriebswelle mit der Schleifscheibe 11 enthält. Die gestrichelten Linien 10a und 11a in Fig. 1 deuten das Maß der angestrebten Schrägstellung, d.h. den Schwenkbereich an. Zusätzlich zeigt Fig. 2a die Verhältnisse bei einer Schleifscheibe 11 in der Grundstellung an. Demgegenüber lässt sich gemäß den Fig. 2b und 2c eine nach außen merklich gewölbte (ballige) Kontur mit einer schmalen Schleifscheibe 11 erzielen, wenn diese nach beiden Seiten schräg gestellt (verschwenkt) wird. Hierbei ist die Schleifscheibe schmaler als die zu schleifende Lagerstelle ausgeführt.

Die mit dem Schleifbelag versehene Umfangsfläche der Schleifscheiben 11 in den Figuren 2b und 2c ist konkav, also nach innen gewölbt, wie das beim Formschleifen erforderlich ist. Die Schleifscheibe 11 ist wesentlich schmäler als die Lagerbreite B, also der Abstand zwischen den Kurbelwangen 9 der Kurbelwelle 1. Durch die geringe Schrägstellung der Schleifscheiben 11 gelingt es aber, die gewölbte Lagerfläche der Haupt- oder Hublager, den in der Fachsprache der Praktiker so genannten "Ballus", in optimaler Genauigkeit herzustellen. Die Schleifscheibe 11 wird hierzu CNC-gesteuert in der Richtung der X- und der Z-Achse hin- und hergefahren und gleichzeitig in der Schwenklagerung 13 verschwenkt. Außerdem bietet die aus den Figuren 2b und 2c ersichtliche Vorgehensweise einen zusätzlichen Vorteil, wenn an einer Kurbelwelle 1 unterschiedlich breite Lagerstellen ballig zu schleifen sind: es reicht dann ein einziger Schleifscheiben-Typ mit einer bestimmten Breite aus. Es ist aber auch möglich, dass die ballige Lagerstelle in zwei separaten Einstichen mit dem Verschwenken der Schleifscheibe geschliffen wird. Beim üblichen Formschleifen wäre in diesem Fall für jede Lagerbreite B eine andere Schleifscheibe mit angepasster Breite erforderlich.

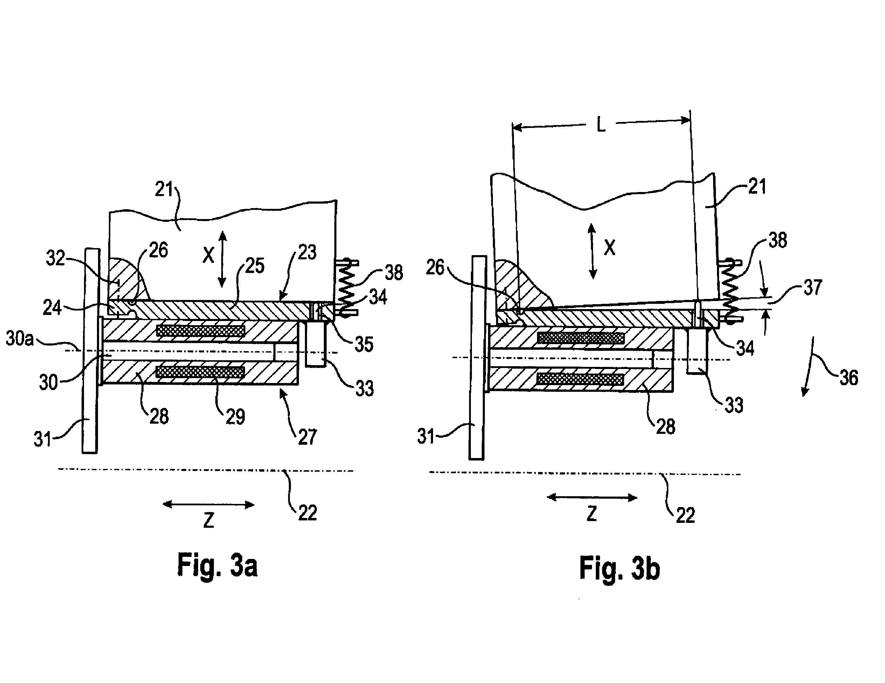

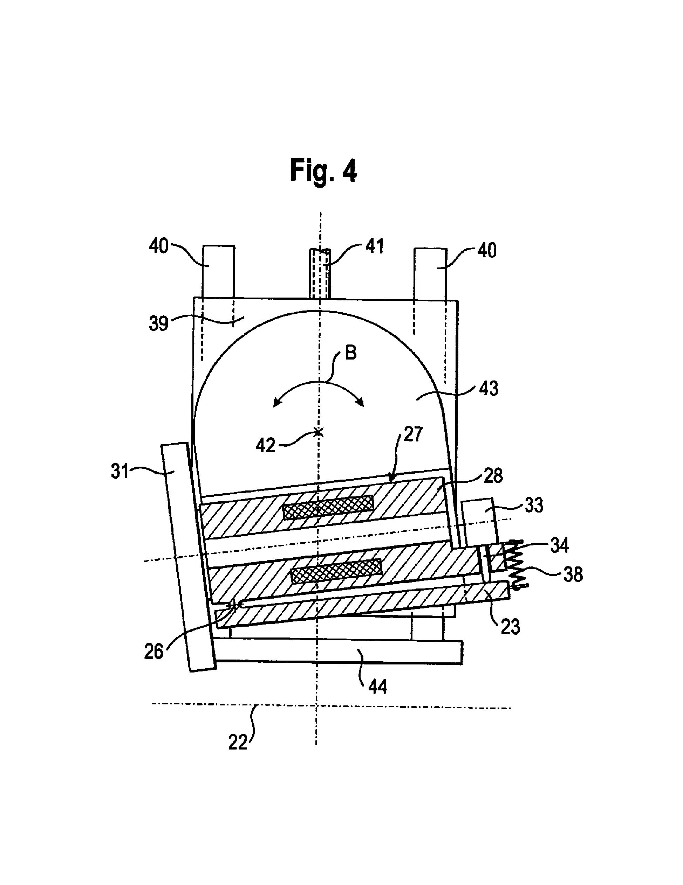

Anhand der Fig. 3a, 3b und 4 ist das Prinzip der erfindungsgemäßen Verstelleinrichtung erläutert, das dem Verfahren gemäß der Erfindung zugrunde liegt. In den Fig. 3a und 3b ist mit der Bezugsziffer 21 ein Aufnahmeteil bezeichnet, das zu der Schleifmaschine gehört, die mit der erfindungsgemäßen Einrichtung ausgestattet ist. Bei dem Aufnahmeteil 21 kann es sich beispielsweise um einen Schleifspindelstock handeln, der in der Richtung senkrecht zu der Längsachse 22 des (nicht dargestellten) Werkstücks, also in Richtung der sogenannten X-Achse, linear an das Werkstück zugestellt wird. Außerdem liegt die gegenseitige lineare Verschiebbarkeit des Aufnahmeteils 21 in der Richtung parallel zur Werkstück - Längsachse 22, also in der sogenannten Z-Achse vor.

Mit dem Aufnahmeteil 21 ist ein Schwenkachsträger 23 verbunden. Er hat die Form einer einteiligen Platte, die aber durch eine Zone gezielter elastischer Materialverformung in zwei Bereiche unterteilt ist. Im vorliegenden Beispiel besteht der plattenförmige Schwenkachsträger 23 aus einem metallenen Werkstoff, und die Zone gezielter elastischer Materialverformung wird durch eine Einkerbung des Plattenquerschnitts erzielt. Die Einkerbung kommt durch zwei parallel verlaufende Schwächungsnuten zustande, die senkrecht zu der durch die X- und Z-Achse gebildeten waagerechten Bezugsebene verlaufen, wie das in den Fig. 3a und 3b erkennbar ist. Auf diese Weise entsteht ein Gelenk oder eine lotrecht verlaufende Schwenkachse 26 nach Art eines Filmscharniers, und die genannten beiden Bereiche der Gelenkeinheit 13 erhalten die Funktion von Schamierflügeln 24 und 25.

Der erste, kürzere Scharnierflügel 24 ist fest mit dem Aufnahmeteil 21 verbunden, wie das durch die Mittellinie 32 angedeutet ist, die eine stabile Mehrfach-Verschraubung andeutet. Der zweite, längere Scharnierflügel 25 hingegen ist fest mit der Schleifspindeleinheit 27 verbunden. Die einzige Verbindung zwischen der Schleifspindeleinheit 27 und dem Aufnahmeteil 21 ist somit die Materialbrücke, die das Gelenk oder die Schwenkachse 26 bildet und die selbst einteiliger Bestandteil des Schwenkachsträgers 23 ist. Die als Filmscharnier ausgebildete Schwenkachse 26 muss einerseits so elastisch sein, dass sie im elastischen Bereich ausgebogen wird und zurückfedert. Andererseits muss sie so stabil sein, dass sie die Schleifspindeleinheit 27 tragen und die resultierenden Kräfte aus der Schleifbearbeitung aufnehmen kann.

Die Schleifspindeleinheit 27 umfasst ein Gehäuse 28, das einen mit 29 angedeuteten Antriebsmotor aufnimmt, der ein Hochfrequenzmotor sein kann und die gleichfalls in dem Gehäuse 28 gelagerte Antriebswelle 30 in Rotation um ihre Rotationsachse 30a versetzt. Die Richtung der Rotationsachse 30a verläuft gemäß Fig. 3a parallel zu der Längsachse 22 des (nicht gezeichneten) Werkstücks. Die Rotationsachse 30a bildet damit die Bezugsgerade für das anschließende Verschwenken der Schleifspindeleinheit 27. An der Antriebswelle 30 ist außerhalb des Gehäuses 28 die Schleifscheibe 31 befestigt. Insgesamt erstreckt sich die Schleifspindeleinheit 27 in der Stellung gemäß Fig. 3a parallel zu dem plattenförmigen Schwenkachsträger 23. Dabei befindet sich die Schleifscheibe 31 an dem einen Ende des Schwenkachsträgers 23 im Bereich des ersten, kürzeren Scharnierflügels 24.

An dem entgegengesetzten Ende des Schwenkachsträgers 23 und damit auch in dem der Schleifscheibe 31 abgewandten Endbereich der Schleifspindeleinheit 27, ist eine Verstelleinheit 33 befestigt. Diese ist fest mit dem zweiten Scharnierflügel 25 verbunden und hat als Betätigungselement einen Druckbolzen 34, der durch eine Öffnung 35 in dem zweiten Scharnierflügel 25 hindurchgreift. Beim Ansteuern und Betätigen der Verstelleinheit 33 fährt der Druckbolzen 34 nach außen vor und stützt sich an der Stirnfläche des Aufnahmeteils 21 ab. Infolgedessen wird der zweite Scharnierflügel 25 um die lotrechte Schwenkachse 26 im Sinne einer Rechtsdrehung (Drehpfeil 36) verschwenkt. Die Schleifspindeleinheit 27 und mit ihr die Schleifscheibe 31 werden dadurch in eine leichte, aber genau einstellbare Schrägstellung gebracht, vgl. hierzu den Schwenkwinkel 37 gemäß Fig. 3b.

Zwischen der Schwenkachse 26 und der Wirkungslinie des Druckbolzens 34 besteht ein erheblicher Längsabstand L. Dadurch erfährt die Stellkraft der Verstelleinheit 33 eine erhebliche Verstärkung zum Auslenken der Schleifspindeleinheit 27. Mit 38 ist in der Gestalt einer Zugfeder eine Einrichtung angedeutet, durch die ständig mit vorgegebener Vorspannkraft die Berührung zwischen dem Druckbolzen 34 und dem Aufnahmeteil 21 aufrechterhalten wird. Ein vorübergehendes Abheben des Druckbolzens 34 durch Schwingungserscheinungen, die zu einem ungenauen Verstellen führen würden, sind dadurch ausgeschlossen.

Es ist nicht erforderlich, dass der Schwenkträger 23 mit der Schwenkachse 26 ein eigenes Bauteil sein muss, wie das in den Fig. 3a und 3b dargestellt ist. Wie Fig. 4 zeigt, kann die Gelenkeinheit 23 auch einstückiges Bestandteil des Gehäuses 28 sein. Entscheidend ist lediglich die Ausbildung eines Filmscharniers, mit dem die Schwenkachse 26 gebildet wird. Desgleichen könnte in den Fig. 3a und 3b auch der erste, kürzere Scharnierflügel ein einstückiger Bestandteil des Aufnahmeteils 21 sein; oder das Aufnahmeteil 21 und das Gehäuse 28 der Schleifspindel 27 könnten über die Materialbrücke der Schwenkachse 26 einstückig zusammenhängen. In der Praxis werden allerdings fertigungstechnische Gesichtspunkte und die erforderliche Präzision den Ausschlag dafür geben, dass eine mehrteilige Konstruktion gewählt wird.

Eine weitere Ausbildung zeigt Fig. 4. In diesem Fall ist das Aufnahmeteil durch einen Schleifspindelstock 39 gebildet, der auf zwei zylindrischen Führungssäulen 40 linear in einer Richtung senkrecht zu der Längsachse 22 des zu schleifenden Werkstücks verfahren wird. Zum Antrieb des Schleifspindelstocks 39 dient eine Gewindespindel 41, die in eine unter dem Schleifspindelstock 39 angeordnete Mutter eingreift. Die durch die Führungssäulen 40 gebildete Transportbahn wird an ihrem vorderen Ende durch ein Brückenteil 44 abgeschlossen. Die waagrecht verlaufenden Führungssäulen 40 und das Brückenteil 44 definieren hier eine waagerechte Bezugsebene, wie sie im Allgemeinen immer durch die X- und Z-Achse definiert ist. Senkrecht zu dieser Bezugsebene verläuft eine lotrechte Achse 42, welche durch eine Lager- und Tragkonstruktion des Schleifspindelstocks 39 gebildet wird. Durch diese Lager- und Tragkonstruktion wird ein Schwenkgehäuse 43 getragen, das in einer ebenfalls waagrechten Ebene um diese lotrechte Achse 42 motorisch verschwenkt wird. Die lotrechte Achse 42 ist im Sprachgebrauch der betrieblichen Praxis die bekannte B-Achse. Von oben gesehen, hat das Schwenkgehäuse 43 die Form eines Kreises mit einem angesetzten Rechteck. Im Bereich dieses angesetzten Rechtecks ist die Gelenkeinheit 23 fest mit dem Schwenkgehäuse 43 verbunden.

Über die als Filmscharnier ausgebildete Schwenkachse 26, die eine Materialbrücke bildet, trägt der Schwenkachsträger 23 die Schleifspindeleinheit 27. Der Schwenkachsträger 23 und die Schleifspindeleinheit 27 sind in diesem Fall einstückig, aber gegeneinander verschwenkbar, miteinander verbunden. Die Einheiten können aber auch mehrteilig aufgebaut sein. Beim Betätigen der Verstelleinheit 33 verschwenkt die Schleifspindeleinheit 27 gegenüber dem Schwenkgehäuse 43 wieder in der Weise, wie es anhand der Fig. 3a und 3b schon beschrieben worden ist.

Auch die Schwenkachse 26 verläuft in lotrechter Richtung. Die Funktion der Schleifmaschinen-Einrichtung gemäß Fig. 4 ist damit ohne Weiteres verständlich. Durch Verschwenken des Schwenkgehäuses 43 um die lotrechte Achse 42 wird zunächst eine Grobeinstellung der Schleifscheibe 31 gegenüber dem Werkstück vorgenommen. Beim Verschwenken des Schwenkgehäuses 43 wird auch die Schleifspindeleinheit 27 mitgenommen, weil sie über die Schwenkachse 26 mit dem Schwenkgehäuse 43 verbunden ist. Anschließend wird eine Feineinstellung vorgenommen, indem die Verstelleinheit 33 betätigt wird. Dann verschwenkt die Schleifspindeleinheit 27 gegenüber der Gelenkeinheit 23 und dem Schwenkgehäuse 43. Dadurch erfolgt die schon erwähnte geringe, aber genau einstellbare Schrägstellung der Schleifscheibe 31 gegenüber dem Werkstück, um die erforderliche Formgenauigkeit der Lagerstelle zu erreichen.

Die Ausführung gemäß Fig. 4 ist dann sinnvoll, wenn an einem Werkstück verschiedene Flächen geschliffen werden sollen, die eine unterschiedliche Grundstellung der Schleifscheiben erfordern, wobei zuletzt auch eine bestimmte Feineinstellung erforderlich ist; dazu wird das Verschwenken mittels der Verstelleinheit 33 notwendig. Eine andere Verwendung des in Fig. 4 dargestellten Prinzips ist dann gegeben, wenn in einem gemeinsamen Schwenkgehäuse zwei oder mehr Schleifspindeleinheiten angeordnet sind. Auf diese Weise können nacheinander unterschiedliche Schleifscheiben zum Einsatz kommen.

Bei der Ausführung nach den Fig. 3a und 3b verläuft die Schleifspindeleinheit und damit auch die Antriebswelle 30 der Schleifscheibe 31 genau parallel zu dem plattenförmigen Schwenkachsträger 23, wenn die Verstelleinheit 33 nicht betätigt, der Druckbolzen 34 also eingezogen ist. Die Gelenkeinheit 23 liegt dann an der Stirnfläche des Aufnahmeteils 21 an. Bei dieser Ausführung kann das Schrägstellen der Schleifspindeleinheit 27 und der Schleifsscheibe 31 immer nur in einer Richtung erfolgen, wie das in Fig. 3b gezeigt ist. Bei der Ausführung der Gelenkeinheit des Schwenkachsträgers 23 gemäß Fig. 4 hingegen kann die Einstellung des Schwenkachsträgers 23 in der Weise erfolgen, dass die Parallelstellung erst durch ein bereichsweises Ausfahrens des Druckbolzens 34 zustande kommt. Bei vollständig eingefahrenem Druckbolzen 34 ergibt sich ein spitzer Winkel zwischen dem Gehäuse 28 der Schleifspindeleinheit 27 und dem Schwenkachsträger 23, der dann im Bereich der Verstelleinheit 33 mit dem Gehäuse 28 in Berührung steht. Die Parallelstellung würde hier also bereits eine bestimmte Vorspannung der Schwenkachse 26 erfordern; dafür ist je nach dem Hub des ausgefahrenen Druckbolzens 34 ein Verschwenken der Schleifspindeleinheit 27 in zwei unterschiedlichen Richtungen möglich, nämlich ausgehend von der Parallelstellung nach außen oder nach innen.

Die Wirkstellung des Druckbolzens 34 kann im Betrieb laufend verändert werden. Wenn die Verstelleinheit 33 in das Programm der Maschinensteuerung einbezogen ist, lassen sich damit ganz bestimmte Schleifkonturen im programmierten Ablauf verwirklichen, vgl. hierzu die Figuren 2b und 2c.

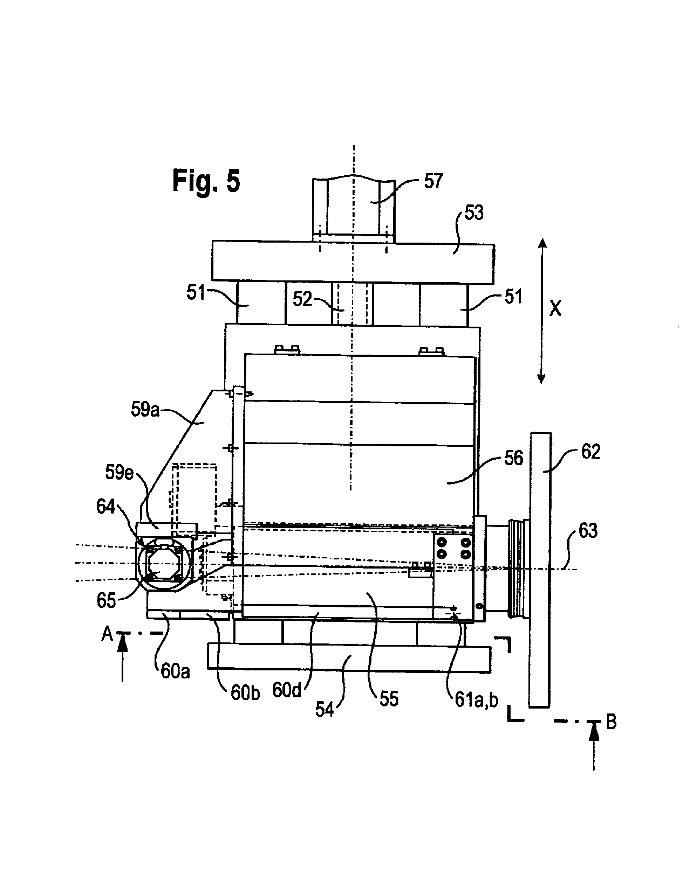

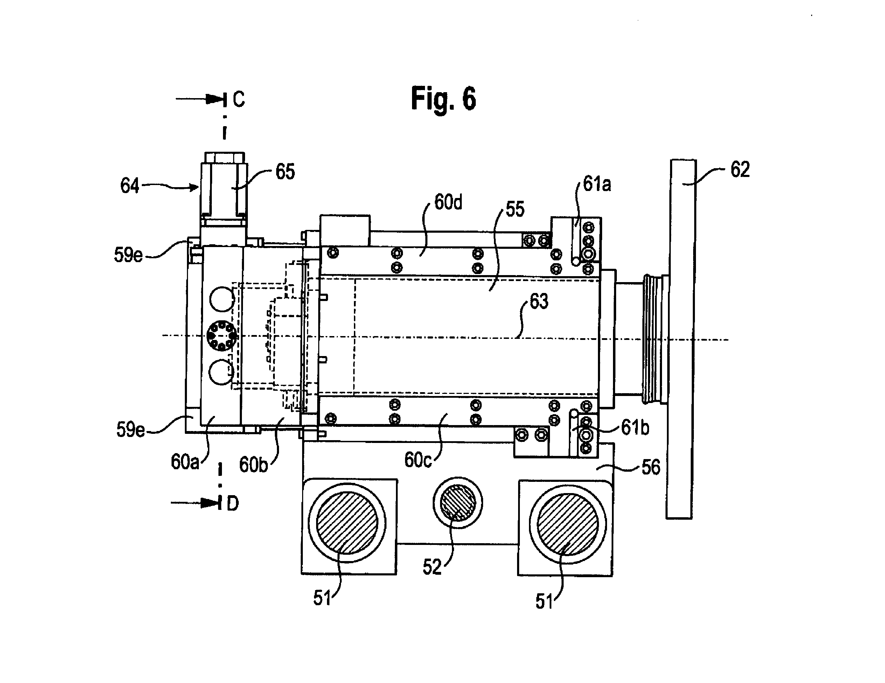

Das praxisnahe Ausführungsbeispiel nach Fig. 5 zeigt wieder zwei Führungssäulen 51, die durch Brückenteile 53 und 54 verbunden sind und zu der Schleifmaschine gehören, die mit der Schleifspindeleinheit 55 ausgestattet ist. Die Führungssäulen 51 und Brückenteile 53, 54 bilden die Bezugsebene für die Achsrichtungen. In der Regel wird die Bezugsebene waagerecht verlaufen. Auf den Führungssäulen 51 gleitet der Schleifspindelstock 56, vgl. hierzu auch den senkrechten Schnitt gemäß Fig. 6. Seinen Antrieb erhält der Schleifspindelstock 56 von der Gewindespindel 52, die durch den Servomotor 57 in Drehung versetzt wird. Im Schleifbetrieb bewegt der Servomotor 57 den Schleifspindelstock 56 CNC-gesteuert in der Richtung der X-Achse, also senkrecht zu der Längsachse des zu schleifenden Werkstücks, das in Fig. 5 nicht dargestellt ist.

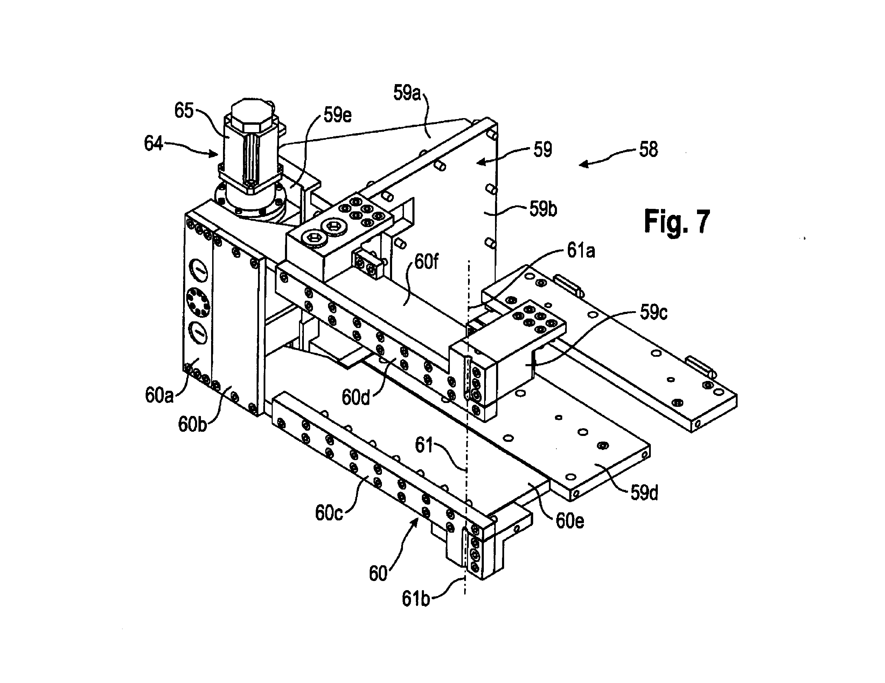

Mit dem Schleifspindelstock 56 fest verschraubt ist eine Stütz- und Tragkonstruktion 58 (vgl. Fig. 7), welche die Schleifspindeleinheit 55 aufnimmt und umschließt. Die Stütz- und Tragkonstruktion 58 besteht aus einem Teilgehäuse 59 und einem Schwenkachsträger 60. Der Verlauf und die Grenzen von Teilgehäuse 59 und Schwenkachsträger 60 sind in den Figuren 5 und 6 nur mit Mühe auseinander zu halten; einen deutlicheren Eindruck vermittelt die räumliche Darstellung gemäß Fig. 7. Wegen der besseren Erkennbarkeit ist in Fig. 7 die Schleifspindeleinheit 55 weggelassen. Außerdem sind in den Fig. 5 bis 7 alle Einzelbereiche, die zu dem Teilgehäuse 59 oder dem Schwenkachsträger 60 gehören, zusätzlich mit den Buchstaben a, b, c... bezeichnet, woraus sich eine gewisse Anschaulichkeit ergibt. Entscheidend ist, dass das Teilgehäuse 59 fest mit dem Schleifspindelstock 56 verschraubt ist, während der Schwenkachsträger 60 nur in einem ersten Teilbereich mit dem Teilgehäuse 59 und dem Schleifspindelstock 56 verschraubt ist. Ein zweiter Teilbereich des Schwenkachsträgers 60 ist gegenüber seinem ersten Teilbereich und damit auch gegenüber dem Schleifspindelstock 56 verschwenkbar; dieser zweite Teilbereich ist fest mit der Schleifspindeleinheit 55 verschraubt.

Die Grenze zwischen den beiden Teilbereichen des Schwenkachsträgers 60 bilden die Zonen gezielter elastischer Materialverformung, die hier wieder durch Materialschwächung in Form von Schwächungsnuten gebildet werden. Dadurch entstehen in dem Material des Schwenkachsträgers 60 obere Schwenkachsen 61 a und untere Schwenkachsen 61 b, die in den Fig. 5 bis 7 deutlich erkennbar sind und zusammen die gesamte geometrische Schwenkachse 61 bilden. Die in den Fig. 5 bis 7 mit 60a bis 60f bezeichneten zusammenhängenden Einzelbereiche des Schwenkachsträgers 60 bilden eine gesonderte Tragkonstruktion, die nur über die beiden Schwenkachsen 61 a und 61 b mit dem ersten Teilbereich und damit mit dem Teilgehäuse 59 zusammenhängt. Allein mit dieser schwenkbaren Tragkonstruktion ist die im Inneren der Stütz- und Tragkonstruktion 58 untergebrachte Schleifspindeleinheit 55 verschraubt. Fig. 7 zeigt u. a. deutlich, dass ausgehend von den Schwenkachsen 61, 61 b ein oberer Tragarm 60d, 60f und ein unterer Tragarm 60c, 60e gebildet sind und dass diese Tragarme 60d, 60f bzw. 60c, 60e an ihren Enden durch ein Brückenteil 60a verbunden sind. An diesen Tragarmen hängt die in Fig. 7 nicht gezeichnete Schleifspindeleinheit 55. Die Schleifspindeleinheit 55 hat auch hier denselben Aufbau wie in den vorangegangenen Ausführungsbeispielen, also ein Gehäuse mit einem Antriebsmotor, einer Antriebswelle und einer Schleifscheibe 62. Daher sind in den Fig. 5 und 6 nur noch die Schleifscheibe 62 und ihre Rotationsachse 63 eingezeichnet und mit Bezugsziffern versehen.

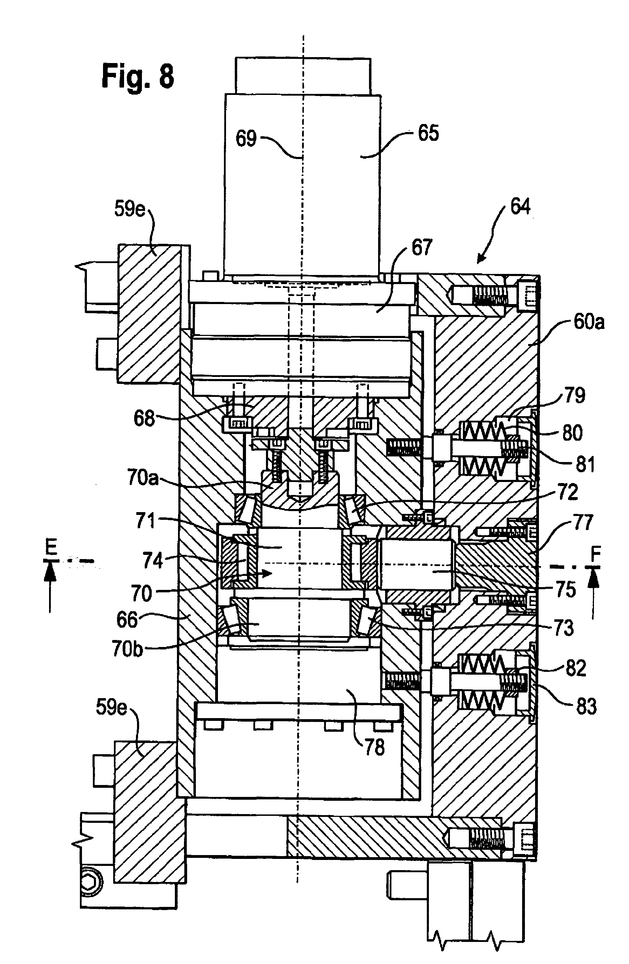

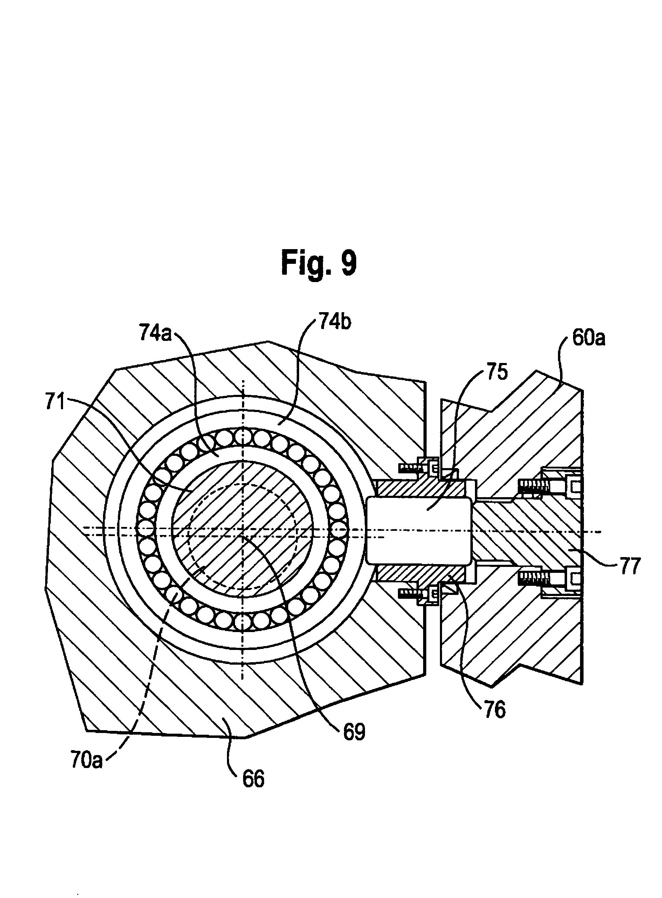

Zum Verschwenken der Schleifspindeleinheit 55 nach dem Ausführungsbeispiel gemäß den Fig. 5 bis 7 dient eine Verstelleinheit 64, von der in den Fig. 5 bis 7 im Wesentlichen nur der nach oben aus der Stütz- und Tragkonstruktion 58 herausragende Servomotor 65 zu sehen ist. Die Funktion der Verstelleinheit 64 wird anhand der Fig. 8 und 9 beschrieben. Dabei ist die Fig. 8 eine vergrößerte und teilweise geschnittene Darstellung entlang der Linie C - D in Fig. 6. Entsprechend ihrer Aufgabe ist die Verstelleinheit 64 in der Stütz- und Tragkonstruktion 58 an dem der Schleifscheibe 62 entgegengesetzten Ende und an einer Stelle angeordnet, wo ein Bereich 59e des fest mit dem Schleifspindelstock 56 verbundenen insgesamt starren Teilgehäuses 59 einem weit von seinen Schwenkachsen 61a, 61 b entfernten Einzelbereich 60a des schwenkbaren Teilbereichs des Schwenkachsträgers 60 gegenübersteht. Exakt diese Stelle zeigt die Fig. 8, vgl. dort links den festen Bereich 59e des Teilgehäuses 59 und rechts den beweglichen Einzelbereich 60a des Schwenkachsträgers 60.

Der Verstellmechanismus der Verstelleinheit 64 ist in einem Gehäuse 66 untergebracht, das fest mit dem festen Bereich 59e verbunden, beispielsweise verschraubt ist. Mit einer gemeinsamen Längs- und Rotationsachse 69 sind in dem Gehäuse 66 in der Richtung von oben nach unten die folgenden Funktionsteile zusammengebaut: der schon erwähnte Servomotor 65, ein Untersetzungsgetriebe 67, eine Kupplung 68 und ein Stellrotor 70, der in axialer Richtung zwei zentrische Außenabschnitte 70a und 70b sowie einen zwischen diesen befindlichen exzentrischen Mittelabschnitt 71 umfasst. Dabei sind die zentrischen Außenabschnitte 70a und 70b in spielfrei vorgespannten Kegelrollenlagern 72 und 73 gelagert, die zur Aufnahme großer Kräfte besonders gut geeignet sind.

Der Mittelabschnitt 71 des Stellrotors 70 hat zwar ebenfalls Kreisquerschnitt; seine Mittelachse liegt jedoch exzentrisch zu der gemeinsamen Längs- und Rotationsachse 69. Die beiden zentrischen Außenabschnitte 70a und 70b bilden zusammen mit dem Mittelabschnitt 71 einen gemeinsamen Drehkörper; der Stellrotor 70 kann somit einteilig hergestellt sein. Der Durchmesser des auf der Seite der Kupplung 68 befindlichen zentrischen Außenabschnitts 70a ist kleiner als der Durchmesser des endseitigen zentrischen Außenabschnitts 70b. Dasselbe gilt für die den Außenabschnitten 70a, 70b zugeordneten Kegelrollenlagern 72, 73.

Auf dem Mittelabschnitt 71 ist der Innenring 74a eines Nadellagers74 drehfest angeordnet, vgl. hierzu auch Fig. 9. Der Außenring 74b des Nadellagers 74 steht mit der ersten Stirnseite eines Druckbolzens 75 in Berührung, der in einer Führungshülse 76 des Gehäuses 66 längsverschieblich geführt ist. Die entgegengesetzte zweite Stirnseite des Führungsbolzens 74 steht mit der Stirnfläche eines Ambosskörpers 77 in ständiger Berührung, der in den beweglichen Einzelbereich 60a des Schwenkachsträgers 60 eingesetzt und darin befestigt ist. Der Ambosskörper 77 und der Druckbolzen 75 sind aus einem besonders widerstandsfähigen Werkstoff ausgeführt und gehärtet, damit sie der ständigen Beanspruchung beim Verstellen der Schleifspindeleinheit 55 widerstehen. Da der Ambosskörper 77 von außen in den beweglichen Einzelbereich 60a des Schwenkachsträgers 60 eingesetzt und durch Schrauben befestigt ist, kann er im Bedarfsfall leicht ausgewechselt werden. Mit der Bezugsziffer 78 ist der mit dem Gehäuse 66 fest verschraubte Gehäuseboden bezeichnet.

Zu beiden Seiten des Ambosskörpers 77 ist in dem in Fig. 8 sichtbaren Einzelbereich 60a des Schwenkachsträgers 60 je eine Ausnehmung 79 vorgesehen, von denen jede ein Paket von Tellerfedern 80 aufnimmt. Die Tellerfedern 80 werden mittig von Zugankern 81 durchsetzt, welche in die Wand des Gehäuses 66 eingeschraubt sind und durch Spannmuttern 82 vorgespannt werden. Die beiden Einheiten aus Tellerfedern 80, Zugankern 81 und Spannmuttern 82 bilden ein Paar von Spanneinrichtungen, welche den Druckbolzen 75 ständig in Anlage an dem verschwenkbaren Teilbereich des Schwenkachsträgers 60 halten. Von außen angesetzte Schutzkappen 83 decken die Spanneinrichtungen nach außen ab und verhindern so ein Verschmutzen im Schleifbetrieb.

Die beschriebene Verstelleinheit 64 arbeitet wie folgt: Wenn der Servomotor 65 angesteuert wird und sich in Bewegung setzt, treibt er über das Untersetzungsgetriebe 67 und die Kupplung 68 den Stellrotor 70 mit einem erheblichen Drehmoment zur Drehung an. Der exzentrische Mittelabschnitt 71 des Stellrotors 70 muss sich zusammen mit dem aufgesetzten Innenring 74a des Nadellagers 74 verdrehen und dadurch den Außenring 74b nach außen drängen. Der Außenring 74b verschiebt daher den Druckbolzen 75 in seiner Führungshülse 76 in einer Richtung, die senkrecht, d.h. radial zu der Längs- und Rotationsachse 69 verläuft, nach außen. Der Außenring 74b des Nadellagers 74 erfährt dabei lediglich eine Verschiebe-Bewegung, ohne sich zu drehen. Das bedeutet, dass zwischen dem Außenring 74b und der Stirnseite des Druckbolzens 75 keine reibungsbehaftete Querbewegung stattfindet. Das führt zu einer sehr exakten Umsetzung von der Drehbewegung des Stellrotors 70 in die lineare Stellbewegung des Druckbolzens 75. Der Druckbolzen 75 überträgt die Verschiebung mit großer Genauigkeit auf den Ambosskörper 77 und damit auf den schwenkbaren Teilbereich des Schwenkachsträgers 60, an dem die Schleifspindeleinheit 55 ausschließlich befestigt ist. Es muss noch einmal daran erinnert werden, dass die Bezeichnungsweise der "Einzelbereiche" 59a, b, c... und 60a, b, c... nur dazu dient, das Verständnis der etwas unübersichtlichen Fig. 5 bis 7 zu erleichtern, dass aber selbstverständlich das Teilgehäuse 59 und der Schwenkachsträger 60 zusammen das einheitliche Gebilde der Stütz- und Trägerkonstruktion 58 bilden. Es ist dann hinsichtlich der Funktion lediglich beim Schwenkachsträger 60 zwischen einem festen, mit dem Teilgehäuse 59 und dem Schleifspindelstock 56 verbundenen Teilbereich und einem zweiten, gegenüber dem ersten Teilbereich um die Schwenkachsen 61a, 61 b schwenkbaren Teilbereich zu unterscheiden.

### Liste der Bezugsziffern

Figuren 1 bis 2c:
   - 1: Kurbelwelle
   - 2: Werkstückspindelstock
   - 3: Reitstock
   - 4: Spannfutter
   - 5: Längsachse der Kurbelwelle
   - 6: Hauptlager
   - 7: Hublager
   - 8: Lünette
   - 9: Kurbelwange
   - 10: Schleifspindeleinheit
   - 10a: Schwenkbereich der Schleifspindeleinheit
   - 11: Schleifscheibe
   - 11a: Schwenkbereich der Schleifscheibe
   - 12: Rotationsachse
   - 13: Schwenklagerung
   - B: Lagerbreite
Figuren 3a, 3b und 4:
   - 21: Aufnahmeteil
   - 22: Längsachse eines Werkstücks
   - 23: Schwenkachsträger
   - 24: erster Scharnierflügel
   - 25: zweiter Scharnierflügel
   - 26: Schwenkachse
   - 27: Schleifspindeleinheit
   - 28: Gehäuse
   - 29: Antriebsmotor
   - 30: Antriebswelle
   - 30a: Rotationsachse
   - 31: Schleifscheibe
   - 32: Mehrfach-Verschraubung
   - 33: Verstelleinheit
   - 34: Druckbolzen
   - 35: Öffnung
   - 36: Drehpfeil
   - 37: Schwenkwinkel
   - 38: Zugfeder (Einrichtung)
   - 39: Schleifspindelstock
   - 40: Führungssäulen
   - 41: Gewindespindel
   - 42: lotrechte Achse
   - 43: Schwenkgehäuse
   - 44: Brückenteil
   - L: Längsabstand
Figuren 5 bis 9:
   - 51: Führungssäule
   - 52: Gewindespindel
   - 53: Brückenteil
   - 54: Brückenteil
   - 55: Schleifspindeleinheit
   - 56: Schleifspindelstock
   - 57: Servomotor
   - 58: Stütz- und Tragkonstruktion
   - 59: Teilgehäuse, Einzelbereiche 59a, b, c...., dabei: 60a Brückenteil; 60d, f oberer Tragarm; 60c, e unterer Tragarm
   - 60: Schwenkachsträger, Einzelbereiche 60a, b, c...
   - 61: gesamte geometrische Schwenkachse
   - 61a: obere Schwenkachse
   - 61b: untere Schwenkachse
   - 62: Schleifscheibe
   - 63: Rotationsachse der Schleifscheibe
   - 64: Verstelleinheit
   - 65: Servomotor
   - 66: Gehäuse der Verstelleinheit
   - 67: Untersetzungsgetriebe
   - 68: Kupplung
   - 69: Längs- und Rotationsachse
   - 70: Stellrotor
   - 70a, b: Außenabschnitt des Stellrotors
   - 71: exzentrischer Mittelabschnitt des Stellrotors
   - 72: Kegelrollenlager
   - 73: Kegelrollenlager
   - 74: Nadellager
   - 74a: Innenring
   - 74b: Außenring
   - 75: Druckbolzen
   - 76: Führungshülse
   - 77: Ambosskörper
   - 78: Gehäuseboden
   - 79: Ausnehmung
   - 80: Tellerfeder
   - 81: Zuganker
   - 82: Spannmutter
   - 83: Schutzkappe

## Patentansprüche

1. Schleifmaschinen-Einrichtung mit einer Schleifspindeleinheit (10, 27, 55), die eine darin gelagerte, motorisch angetriebene Antriebswelle (30) und eine an deren einem Ende befestigte Schleifscheibe (11, 31, 62) aufweist, und mit einer Schwenklagerung der Schleifspindeleinheit (10, 27, 55) an einem Aufnahmeteil (21) der Schleifmaschine, wobei durch die Schwenklagerung unterschiedliche Schrägstellungen der Antriebswelle (30) gegenüber einer Bezugsgeraden eingestellt werden,
**gekennzeichnet durch** die folgenden Merkmale:
a) die Schleifspindeleinheit (10, 27, 55) ist über Zonen gezielter elastischer Materialverformung mit dem Aufnahmeteil (21) verbunden und wird von diesem getragen;
b) die Zonen gezielter elastischer Materialverformung befinden sich in dem der Schleifscheibe (11, 31, 62) zugewandten ersten Endbereich der Antriebswelle (30);
c) in dem der Schleifscheibe (11, 31, 62) entgegengesetzten zweiten Endbereich der Antriebswelle (30) befindet sich eine Verstelleinheit (33, 64), die bei ihrer Aktivierung eine auf die Schleifspindeleinheit (10, 27, 55) wirkende Stellkraft ausübt, die quer zu der Längsachse (30a, 63) der Antriebswelle (30) gerichtet ist und deren Schrägstellung über die Zonen gezielter elastischer Materialverformung steuert.

2. Schleifmaschinen-Einrichtung nach Anspruch 1, **dadurch gekennzeichnet, dass** die Zonen gezielter elastischer Materialverformung die Funktion einer Schwenkachse (26, 61a, 61 b) mit zwei an diese anschließenden Scharnierflügeln (24, 25) nach Art eines Filmscharniers aufweisen, wobei der erste Scharnierflügel (24) die Schleifspindeleinheit (10, 27, 55) trägt und der zweite Scharnierflügel (25) mit dem Aufnahmeteil (21) verbunden ist.

3. Schleifmaschinen-Einrichtung nach Anspruch 2, **dadurch gekennzeichnet, dass** die Schwenkachse (26, 61 a, 61 b) konstruktionsinhärent durch eine oder mehrere Zonen von örtlich gezielter Schwächung oder Verformung ausgebildet ist.

4. Schleifmaschinen-Einrichtung nach Anspruch 3, **dadurch gekennzeichnet, dass** die Schwenkachse (26a, 61a, 61b) durch mindestens eine Längsnut festgelegt ist, die sich an der Verbindungsstelle von Schleifspindeleinheit (10, 27, 55) und Aufnahmeteil (21) längs der Schwenkachse (26a, 61 a, 61 b) erstreckt und in dem Material der Verbindungsstelle ausgenommen ist.

5. Schleifmaschinen-Einrichtung nach Anspruch 2, **dadurch gekennzeichnet, dass** die Zonen gezielter elastischer Materialverformung aus einem metallenen Werkstoff bestehen und die Schwenkachse durch eine örtliche Gefügebehandlung des Werkstoffs gebildet ist.

6. Schleifmaschinen-Einrichtung nach mindestens einem der Ansprüche 2 bis 5, **dadurch gekennzeichnet, dass** die Schwenkachse (26a, 61a, 61b) an einem Schwenkachsträger (23, 60) ausgebildet ist, der sich zwischen dem Aufnahmeteil (21) und der Schleifspindeleinheit (27, 55) befindet und mit beiden verbunden ist.

7. Schleifmaschinen-Einrichtung nach Anspruch 6, **dadurch gekennzeichnet, dass** der Schwenkachsträger (60) Bestandteil einer die Schleifspindeleinheit (55) aufnehmenden und versteifenden Stütz- und Tragkonstruktion (58) ist.

8. Schleifmaschinen-Einrichtung nach Anspruch 7, **dadurch gekennzeichnet, dass** der Schwenkachsträger (60) über ein Teilgehäuse (59) mit dem Aufnahmeteil der Schleifmaschine und über zwei parallel verlaufende Tragarme (60c, 60e; 60d, 60f) mit der Schleifspindeleinheit (55) verbunden ist, wobei die beiden Tragarme (60c, 60e; 60d, 60f) sich längs der Schleifspindeleinheit (55) erstrecken und abschnittsweise je eine Schwenkachse (61 a, 61 b) zur Bildung der gesamten Schwenkachse (61) aufweisen.

9. Schleifmaschinen-Einrichtung nach mindestens einem der Ansprüche 1 bis 8, **dadurch gekennzeichnet, dass** die Verstelleinheit (33, 64) mittels eines beweglichen Druckbolzens (34, 75) wirksam ist, der im aktivierten Zustand durch mechanische Berührung einen steuerbaren Abstand zwischen der Schleifspindeleinheit (10, 27, 55) und dem Aufnahmeteil (21) oder einem mit diesem starr verbundenen Zwischenbauteil herstellt und dadurch die Schleifspindeleinheit (10, 27, 55) verschwenkt.

10. Schleifmaschinen-Einrichtung mit den Merkmalen der Ansprüche 6 bis 9, **dadurch gekennzeichnet, dass** die Verstelleinheit (64) an dem Teilgehäuse (59) befestigt ist und der bewegliche Druckbolzen (75) an einem Brückenteil (60a) anliegt, das die ausschwenkbaren Enden der beiden Tragarme (60c, 60e; 60d, 60f) miteinander verbindet.

11. Schleifmaschinen-Einrichtung nach Anspruch 9 oder 10, **dadurch gekennzeichnet, dass** die folgenden Merkmale vorgesehen sind:
a) in einem Gehäuse (66) der Verstelleinheit (33, 64) ist ein Stellrotor (70) gelagert, der bei Betätigung durch einen Servomotor (65) eine Winkelverstellung um seine Längs- und Rotationsachse (69) erfährt;
b) der Stellrotor (70) weist einen exzentrischen Mittelabschnitt (71) auf, der drehfest den Innenring (74a) eines Nadellagers (74) trägt;
c) der Außenring (74b) des Nadellagers (74) steht in Berührung mit dem Druckbolzen (75), der in der Richtung radial zu der Längs- und Rotationsachse (69) des Stellrotors (70) gleitfähig ist;
d) die Verstelleinheit (33, 64) ist an einer Stelle der Schleifmaschinen-Einrichtung angeordnet, in der ein statisch dem Aufnahmeteil (21) zuzurechnendes erstes Bauteil einem demgegenüber mittels der Schwenkachse (26, 61) beweglichen zweiten Bauteil gegenübersteht, wobei das Gehäuse (66) der Verstelleinheit (33, 64) mit dem einen Bauteil fest verbunden und der Druckbolzen (75) durch Federn (38, 80) in ständiger spielfreier Anlage an dem jeweils anderen Bauteil gehalten ist.

12. Schleifmaschinen-Einrichtung nach mindestens einem der Ansprüche 1 bis 11, **dadurch gekennzeichnet, dass** das Aufnahmeteil (21) ein mindestens in einer Richtung linear beweglicher Schleifspindelstock (56) ist.

13. Schleifmaschinen-Einrichtung nach mindestens einem der Ansprüche 1 bis 11, **dadurch gekennzeichnet, dass** das Aufnahmeteil ein Schwenkgehäuse (43) ist, das selbst um eine Schwenkachse (42) schwenkbar auf einem mindestens in einer Richtung linear beweglichen Schleifspindelstock (39) angeordnet ist, wobei die Schwenkachse (42) senkrecht zu der Bewegungsebene des Schleifspindelstocks (39) gerichtet ist, derart, dass zusätzlich zu dem großen Schwenkbereich des Schwenkgehäuses (43) eine Korrektur-Einstellung über die Zonen gezielter elastischer Materialverformung erfolgen kann.

14. Schleifmaschinen-Einrichtung nach mindestens einem der Ansprüche 2 bis 13, **dadurch gekennzeichnet, dass** bei einer Schleifmaschine mit CNC-Steuerung das Verschwenken der Schleifspindeleinheit (10, 27, 55) während des Schleifens erfolgt und in die CNC-Steuerung einbezogen ist.

15. Verfahren zum Verschwenken einer Schleifspindeleinheit (10, 27, 55), die über mindestens eine Schwenkachse (26, 61a, 61 b) mit einem Aufnahmeteil (21) einer Schleifmaschine verbunden ist und eine motorisch angetriebene Antriebswelle (30) sowie eine an deren einem Ende befestigte Schleifscheibe (11, 31, 62) aufweist, wodurch beim Verschwenken unterschiedliche Schrägstellungen der Antriebswelle (30) gegenüber einer Bezugsgeraden eingestellt werden, **dadurch gekennzeichnet, dass** die Verbindung zwischen der Schleifspindeleinheit (10, 27, 55) und dem Aufnahmeteil (21) durch einen einstückigen Materialbereich hergestellt wird und dass der Wirkangriff einer Verstelleinheit (33, 64) im Sinne des Verschwenkens eine in diesem Materialbereich ausgebildete Zone von gezielter elastischer Materialverformung eine Schwenkachse (26, 61a, 61b) wirksam werden lässt, die formsteif und spielfrei einen Verschwenkweg von wenigen Bogenminuten ermöglicht.

16. Verfahren nach Anspruch 15, **dadurch gekennzeichnet, dass** die Schleifspindeleinheit (27) an einem das Aufnahmeteil bildenden Schwenkgehäuse (43) angelenkt ist, das seinerseits als Ganzes zusammen mit der Schleifspindeleinheit (27) um eine im Sinne des Maschinenbaus übliche Schwenkachse (42) motorisch verschwenkt wird, wobei die Schwenkachsen (26) der Schleifspindeleinheit (27) und des Schwenkgehäuses (43) parallel zueinander verlaufen und die beiden Schwenkbewegungen unabhängig voneinander, aber im funktionellen Zusammenhang gesteuert werden, derart, dass den großen Schwenkwegen des Schwenkgehäuses (43) die Mikroschwenkwege der Schleifspindeleinheit (27) relativ zum Schwenkgehäuse (43) überlagert werden.

## Claims

1. Grinding machine device with a grinding spindle unit (10, 27, 55), which has a motor-driven drive shaft (30) mounted therein and a grinding wheel (11, 31, 62) fastened to one end thereof, and with a pivotable mounting of the grinding spindle unit (10, 27, 55) on a receiving part (21) of the grinding machine, wherein, due to the pivotable mounting, different inclinations of the drive shaft (30) with respect to a reference line are set,
**characterized by** the following features:
a) the grinding spindle unit (10, 27, 55) is connected via zones of selective elastic material deformation to the receiving part (21) and is supported thereby;
b) the zones of selective elastic material deformation are located in the first end region of the drive shaft (30) facing toward the grinding wheel (11, 31, 62);
c) an adjusting unit (33, 64), which, upon activation, exerts an actuating force acting on the grinding spindle unit (10, 27, 55), which is directed transverse to the longitudinal axis (30a, 63) of the drive shaft (30) and which controls the inclination is controlled via the zones of selected elastic material deformation, is located in the second end region of the drive shaft (30) opposite the grinding wheel (11, 31, 62).

2. Grinding machine device according to Claim 1, **characterized in that** the zones of selective elastic material deformation have the function of a pivot axis (26, 61a, 61b) with two hinge leaves (24, 25) connected thereto in the manner of a film hinge, wherein the first hinge leaf (24) supports the grinding spindle unit (10, 27, 55) and the second hinge leaf (25) is connected to the receiving part (21).

3. Grinding machine device according to Claim 2, **characterized in that** the pivot axis (26, 61a, 61b) is formed in a construction-inherent manner by one or more zones of locally selective weakening or deformation.

4. Grinding machine device according to Claim 3, **characterized in that** the pivot axis (26a, 61a, 61b) is defined by at least one longitudinal groove, which extends at the connection point between the grinding spindle unit (10, 27, 55) and receiving part (21) along the pivot axis (26a, 61a, 61b) and is excluded in the material of the connection point.

5. Grinding machine device according to Claim 2, **characterized in that** the zones of selective elastic material deformation consist of a metallene material and the pivot axis is formed by a local treatment of the structure of the material.

6. Grinding machine device according to at least one of Claims 2 to 5, **characterized in that** the pivot axis (26a, 61a, 61b) is formed on a pivot axis support (23, 60) which is located between the receiving part (21) and the grinding spindle unit (27, 55) and is connected thereto.

7. Grinding machine device according to Claim 6, **characterized in that** the pivot axis support (60) is a component of a supporting and carrying construction (58) receiving and stiffening the grinding spindle unit (55).

8. Grinding machine device according to Claim 7, **characterized in that** the pivot axis support (60) is connected via a sub-housing (59) to the receiving part of the grinding machine and is connected via two parallel supporting arms (60c, 60e; 60d, 60f) to the grinding spindle unit (55), wherein the two supporting arms (60c, 60e; 60d, 60f) extend along the grinding spindle unit (55) and, over portions, each have a pivot axis (61a, 61b) forming the overall pivot axis (61).

9. Grinding machine device according to at least one of Claims 1 to 8, **characterized in that** the adjusting unit (33, 64) is effective by means of a movable clamping bolt (34, 75), which in the activated state, by a means of mechanical contact, produces a controllable spacing between the grinding spindle unit (10, 27, 55) and the receiving part (21) or an intermediate component connected rigidly thereto and thus pivots the grinding spindle unit (10, 27, 55).

10. Grinding machine device having the features of Claims 6 to 9, **characterized in that** the adjusting unit (64) is fastened to the sub-housing (59) and the movable clamping bolt (75) bears against a bridge part (60a), which interconnects the ends of the two supporting arms (60c, 60e; 60d, 60f) that can be pivoted out.

11. Grinding machine device according to Claim 9 or 10, **characterized in that** the following features are provided:
a) a rotor actuator (70) is mounted in a housing (66) of the adjusting unit (33, 64) and, upon actuation by a servomotor (65), experiences an angular displacement about its longitudinal and rotation axis (69);
b) the rotor actuator (70) has an eccentric middle portion (71), which supports the inner ring (74a) of a needle bearing (74) in a rotationally engaged manner;
c) the outer ring (74b) of the needle bearing (74) is in contact with the clamping bolt (75), which is slidable in the direction redial to the longitudinal and rotation axis (69) of the rotor actuator (70);
d) the adjusting unit (33, 64) is arranged at a point of the grinding machine device in which a first component to be assigned statically to the receiving part (21) is arranged opposite a second component movable with respect to the first component by means of the pivot axis (26, 61), wherein the housing (66) of the adjusting unit (33, 64) is fixedly connected to one component and the clamping bolt (75) is held by springs (38, 80) so as to bear constantly against the other component without play.

12. Grinding machine device according to at least one of Claims 1 to 11, **characterized in that** the receiving part (21) is a grinding headstock (56) movable linearly at least in one direction.

13. Grinding machine device according to at least one of Claims 1 to 11, **characterized in that** the receiving part is a pivot housing (43) that itself is arranged pivotably about a pivot axis (42) on a grinding headstock (39) movable linearly at least in one direction, wherein the pivot axis (42) is directed perpendicular to the movement plane of the grinding headstock (39) in such a way that, in addition to the large pivot range of the pivot housing (43), a correction adjustment can be implemented via the zones of selective elastic material deformation.

14. Grinding machine device according to at least one of Claims 2 to 13, **characterized in that**, in a case of a grinding machine with CNC control, the grinding spindle unit (10, 27, 55) is pivoted during the grinding process and is incorporated into the CNC control.

15. Method for pivoting a grinding spindle unit (10, 27, 55) which is connected via at least one pivot axis (26, 61a, 61b) to a receiving part (21) of a grinding machine and has a motor-driven drive shaft (30) and also a grinding wheel (11, 31, 62) fastened to an end thereof, whereby, during the pivoting process, different inclinations of the drive shaft (30) with respect to a reference line can be set, **characterized in that** the connection between the grinding spindle unit (10, 27, 55) and the receiving part (21) is produced by a one-piece material region, and **in that** the effective engagement of an adjusting unit (33, 64) within the sense of the pivoting motion allows a pivot axis (26, 61a, 61b) to become effective by means of a zone of selective elastic deformation formed in this material region, which pivot axis enables an implementation of pivoting of a few arc minutes in a dimensionally rigid manner and without play.

16. Method according to Claim 15, **characterized in that** the grinding spindle unit (27) is articulated to a pivot housing (43) forming the receiving part, said pivot housing in turn being pivoted in a motor-driven manner as a whole together with the grinding spindle unit (27) about a pivot axis (42), which is conventional within the context of mechanical engineering, wherein the pivot axes (26) of the grinding spindle unit (27) and of the pivot housing (43) run parallel to one another and the two pivot movements are controlled independently of one another, but in a functional relationship, in such a way that the large pivot paths of the pivot housing (43) are superimposed by the micro pivot paths of the grinding spindle unit (27) relative to the pivot housing (43).

## Revendications

1. Dispositif de meuleuse comprenant une unité de broche porte-meule (10, 27, 55) qui comprend un arbre d'entraînement (30) entraîné par un moteur et monté dans celle-ci et un disque de meulage (11, 31, 62) fixé à l'une de ses extrémités, et présentant un montage pivotant de l'unité de broche porte-meule (10, 27, 55) sur une partie de réception (21) de la meuleuse, différentes positions inclinées de l'arbre d'entraînement (30) par rapport à une droite de référence étant réglées au moyen du montage pivotant,
**caractérisé par** les caractéristiques suivantes :
a) l'unité de broche porte-meule (10, 27, 55) est reliée à la partie de réception (21) et supportée par celle-ci par le biais de zones de déformation de matériau élastique ciblée ;
b) les zones de déformation de matériau élastique ciblée se trouvent dans la première région d'extrémité de l'arbre d'entraînement (30) tournée vers le disque de meulage (11, 31, 62) ;
c) dans la deuxième région d'extrémité de l'arbre d'entraînement (30) opposée au disque de meulage (11, 31, 62) se trouve une unité de réglage (33, 64) qui exerce, lors de son activation, une force de réglage agissant sur l'unité de broche porte-meule (10, 27, 55), laquelle force de réglage est orientée transversalement à l'axe longitudinal (30a, 63) de l'arbre d'entraînement (30), et dont commandée la position inclinée par le biais des zones de déformation de matériau élastique ciblée.

2. Dispositif de meuleuse selon la revendication 1, **caractérisé en ce que** les zones de déformation de matériau élastique ciblée présentent la fonction d'un axe de pivotement (26, 61a, 61b) avec deux volets de charnière (24, 25) se raccordant à celui-ci à la manière d'une charnière film, le premier volet de charnière (24) portant l'unité de broche porte-meule (10, 27, 55) et le deuxième volet de charnière (25) étant relié à la partie de réception (21).

3. Dispositif de meuleuse selon la revendication 2, **caractérisé en ce que** l'axe de pivotement (26, 61a, 61b) est formé, de manière inhérente à sa construction, par une ou plusieurs zones d'affaiblissement ou de déformation ciblé(e) localement.

4. Dispositif de meuleuse selon la revendication 3, **caractérisé en ce que** l'axe de pivotement (26a, 61a, 61b) est défini par au moins une rainure longitudinale qui s'étend au niveau du point de liaison de l'unité de broche porte-meule (10, 27, 55) et de la partie de réception (21) le long de l'axe de pivotement (26a, 61a, 61b) et est exclue dans le matériau du point de liaison.

5. Dispositif de meuleuse selon la revendication 2, **caractérisé en ce que** les zones de déformation de matériau élastique ciblée sont constituées d'une matière métallique et l'axe de pivotement est formé par un traitement local de la structure de la matière.

6. Dispositif de meuleuse selon au moins l'une quelconque des revendications 2 à 5, **caractérisé en ce que** l'axe de pivotement (26a, 61a, 61b) est réalisé sur un support d'axe de pivotement (23, 60) qui se trouve entre la partie de réception (21) et l'unité de broche porte-meule (27, 55) et est relié aux deux.

7. Dispositif de meuleuse selon la revendication 6, **caractérisé en ce que** le support d'axe de pivotement (60) fait partie d'une structure de support et porteuse (58) recevant et rigidifiant l'unité de broche porte-meule (55).

8. Dispositif de meuleuse selon la revendication 7, **caractérisé en ce que** le support d'axe de pivotement (60) est relié à la partie de réception de la meuleuse par le biais d'un boîtier partiel (59) et est relié à l'unité de broche porte-meule (55) par le biais de deux bras porteurs (60c, 60e ; 60d, 60f) s'étendant parallèlement, les deux bras porteurs (60c, 60e ; 60d, 60f) s'étendant le long de l'unité de broche porte-meule (55) et comprenant, par portions, un axe de pivotement respectif (61a, 61b) pour former l'axe de pivotement global (61).

9. Dispositif de meuleuse selon au moins l'une quelconque des revendications 1 à 8, **caractérisé en ce que** l'unité de réglage (33, 64) est effective au moyen d'un boulon de pression mobile (34, 75) qui, à l'état activé, produit par contact mécanique un écartement pouvant être commandé entre l'unité de broche porte-meule (10, 27, 55) et la partie de réception (21) ou un composant intermédiaire relié rigidement à celle-ci et pivote ainsi l'unité de broche porte-meule (10, 27, 55).

10. Dispositif de meuleuse présentant les caractéristiques des revendications 6 à 9, **caractérisé en ce que** l'unité de réglage (64) est fixée au boîtier partiel (59) et le boulon de pression mobile (75) s'applique contre une partie de pont (60a) qui relie l'une à l'autre les extrémités, pouvant être pivotées vers l'extérieur, des deux bras porteurs (60c, 60e ; 60d, 60f).

11. Dispositif de meuleuse selon la revendication 9 ou 10, **caractérisé en ce que** les caractéristiques suivantes sont prévues :
a) un rotor de réglage (70) est monté dans un boîtier (66) de l'unité de réglage (33, 64), lequel rotor de réglage, lors de l'actionnement par un servomoteur (65), subit un réglage angulaire autour de son axe longitudinal et de rotation (69) ;
b) le rotor de réglage (77) comprend une portion médiane excentrique (71), qui porte de manière solidaire en rotation la bague intérieure (74a) d'un palier à aiguilles (74) ;
c) la bague extérieure (74b) du palier à aiguilles (74) est en contact avec le boulon de pression (75) qui peut glisser dans la direction radiale par rapport à l'axe longitudinal et de rotation (69) du rotor de réglage (70) ;
d) l'unité de réglage (33, 64) est disposée à un point du dispositif de meuleuse auquel un premier composant à attribuer statiquement à la partie de réception (21) est en regard d'un deuxième composant mobile par rapport au premier composant au moyen de l'axe de pivotement (26, 61), le boîtier (66) de l'unité de réglage (33, 64) étant relié fixement à l'un des composants et le boulon de pression (75) étant maintenu par des ressorts (38, 80) en appui constant sans jeu contre l'autre composant respectif.

12. Dispositif de meuleuse selon au moins l'une quelconque des revendications 1 à 11, **caractérisé en ce que** la partie de réception (21) est une poupée porte-meule (56) mobile linéairement au moins dans une direction.

13. Dispositif de meuleuse selon au moins l'une quelconque des revendications 1 à 11, **caractérisé en ce que** la partie de réception est un boîtier de pivotement (43) qui est lui-même disposé de manière à pouvoir pivoter autour d'un axe de pivotement (42) sur une poupée porte-meule (39) mobile linéairement au moins dans une direction, l'axe de pivotement (42) étant orienté perpendiculairement au plan de déplacement de la poupée porte-meule (39), de telle sorte qu'en plus de la grande plage de pivotement du boîtier de pivotement (43), un réglage de correction puisse être effectué par le biais des zones de déformation de matériau élastique ciblée.

14. Dispositif de meuleuse selon au moins l'une quelconque des revendications 2 à 13, **caractérisé en ce que**, dans le cas d'une meuleuse à commande CNC, le pivotement de l'unité de broche porte-meule (10, 27, 55) s'effectue pendant le meulage et est compris dans la commande CNC.

15. Procédé de pivotement d'une unité de broche porte-meule (10, 27, 55) qui est reliée à une partie de réception (21) d'une meuleuse par le biais d'au moins un axe de pivotement (26, 61a, 61b) et qui comprend un arbre d'entraînement (30) entraîné par un moteur ainsi qu'un disque de meulage (11, 31, 62) fixé à l'une de ses extrémités, de telle sorte que différentes positions inclinées de l'arbre d'entraînement (30) par rapport à une droite de référence soient réglées lors du pivotement, **caractérisé en ce que** la liaison entre l'unité de broche porte-meule (10, 27, 55) et la partie de réception (21) est produite par une région de matériau d'un seul tenant, et **en ce que** l'engagement effectif d'une unité de réglage (33, 64) au sens du pivotement permet à un axe de pivotement (26, 61a, 61b) de devenir effectif au moyen d'une zone de déformation de matériau élastique ciblée réalisée dans cette région de matériau, lequel axe de pivotement permet une course de pivotement de quelques minutes d'arc avec une forme rigide et sans jeu.

16. Procédé selon la revendication 15, **caractérisé en ce que** l'unité de broche porte-meule (27) est articulée sur un boîtier de pivotement (43) formant la partie de réception, lequel est pour sa part pivoté dans son ensemble au moyen d'un moteur, conjointement avec l'unité de broche porte-meule (27), autour d'un axe de pivotement (42) usuel au sens de la construction mécanique, les axes de pivotement (26) de l'unité de broche porte-meule (27) et du boîtier de pivotement (43) s'étendant parallèlement l'un à l'autre et les deux mouvements de pivotement étant commandés indépendamment l'un de l'autre, mais en relation fonctionnelle, de telle sorte que les grandes courses de pivotement du boîtier de pivotement (43) soient superposées aux courses de micropivotement de l'unité de broche porte-meule (27) par rapport au boîtier de pivotement (43).
